(19) Europäisches Patentamt / European Patent Office / Office européen des brevets

(11) **EP 4 517 387 A1**

(12) **EUROPEAN PATENT APPLICATION**
published in accordance with Art. 153(4) EPC

(43) Date of publication:
**05.03.2025 Bulletin 2025/10**

(21) Application number: **23795130.6**

(22) Date of filing: **19.04.2023**

(51) International Patent Classification (IPC):
*G01S 19/39* (2010.01)

(52) Cooperative Patent Classification (CPC):
**G01S 19/39; H04W 4/02; H04W 56/00**

(86) International application number:
**PCT/CN2023/089169**

(87) International publication number:
**WO 2023/207697 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.04.2022 CN 202210457883**

(71) Applicant: **Datang Mobile Communications Equipment Co., Ltd.
Beijing 100085 (CN)**

(72) Inventors:
• **REN, Bin**
  **Beijing 100085 (CN)**
• **DA, Ren**
  **Beijing 100085 (CN)**
• **REN, Xiaotao**
  **Beijing 100085 (CN)**
• **ZHANG, Zhenyu**
  **Beijing 100085 (CN)**
• **FANG, Rongyi**
  **Beijing 100085 (CN)**

(74) Representative: **Cabinet Nony
11 rue Saint-Georges
75009 Paris (FR)**

(54) **CARRIER PHASE POSITIONING METHOD, TERMINAL, NETWORK SIDE DEVICE, AND LMF**

(57)    A carrier phase positioning method, a terminal, a network side device, and an LMF are provided, which relate to the field of wireless communications technology. The terminal corrects a first downlink POA based on adjustment information about ATA and/or AFA performed by the terminal, to obtain a first downlink corrected POA; and determines a location of the terminal based on the first downlink corrected POA. The method utilizes the adjustment information about ATA and/or AFA to correct the POA, which can eliminate the influence of ATA and AFA performed by the terminal on carrier phase positioning, and thus improve the accuracy of carrier phase positioning.

**FIG. 1**

EP 4 517 387 A1

**Description**

**CROSS-REFERENCE TO RELATED APPLICATIONS**

This application claims priority to Chinese Patent Application No. 202210457883.3, filed with CNIPA on April 27, 2022, entitled as "CARRIER PHASE POSITIONING METHOD, TERMINAL, NETWORK SIDE DEVICE, AND LMF", the entire contents of which are incorporated herein by reference.

**TECHNICAL FIELD**

The present disclosure relates to the technical field of wireless communications, and in particular, to a carrier phase positioning method, a terminal, a network side device, and an LMF.

**BACKGROUND**

In carrier phase positioning technique of satellite system, Positioning Reference Signal sent by the satellite to the terminal (User Equipment, UE) is continuous, which ensures the accuracy of carrier phase measurement quantity (Phase of Arrival, POA) received by the terminal.

However, in 5G positioning system, crystal oscillators used in the 5G base station and the terminal have a frequency deviation; consequently, the terminal may perform autonomous time deviation control (Autonomous Time Adjustment, ATA) and autonomous frequency deviation control (Autonomous Frequency Adjustment, AFA) by default. Since the 5G positioning system employs downlink Positioning Reference Signal, PRS, and uplink Sounding Reference Signal for positioning, SRS-Pos, which are discontinuous, the frequency deviation of the crystal oscillator of the terminal as well as ATA and AFA performed by the terminal may result in cycle slip of the carrier phase measurement quantity, degrading the accuracy of carrier phase positioning.

**SUMMARY**

Embodiments of the present disclosure provide a carrier phase positioning method, a terminal, a network side device, and an LMF that can eliminate adverse effect of ATA and AFA performed by the terminal on carrier phase positioning and improve the accuracy of carrier phase positioning.

In a first aspect, a carrier phase positioning method is provided according to an embodiment of the present disclosure. The method is applied to a terminal, and includes:

correcting a first downlink Phase of Arrival, POA, based on adjustment information about Autonomous Time Adjustment, ATA, and/or Autonomous Frequency Adjustment, AFA, performed by the terminal to obtain a first downlink corrected POA, where the first downlink POA is obtained by performing measurement on a first downlink Positioning Reference Signal, PRS, sent by at least one network side device; and
determining a location of the terminal based on the first downlink corrected POA.

In the carrier phase positioning method provided by embodiments of the present disclosure, the terminal utilizes the adjustment information about ATA and/or AFA to separately correct the first downlink POA corresponding to each network side device, which can eliminate the influence of ATA and AFA performed by the terminal on the carrier phase positioning, thereby improving the accuracy of the carrier phase positioning.

In an optional embodiment, prior to the correcting the first downlink POA based on the adjustment information about ATA and/or AFA performed by the terminal, the method further includes:

performing ATA and/or AFA within a non-PRS duration; and
receiving a first PRS sent by the at least one network side device and performing measurement on the received first PRS, within a PRS duration.

In an optional embodiment, the determining the location of the terminal based on the first downlink corrected POA includes:

determining a second downlink corrected POA based on the adjustment information and the first downlink corrected POA; and
determining the location of the terminal based on the second downlink corrected POA corresponding to the at least one network side device.

In an optional embodiment, the determining the location of the terminal based on the first downlink corrected POA includes:

determining a Reference Signal Time Difference, RSTD, between downlink Time of Arrivals, TOAs, of every two network side devices based on the downlink TOA corresponding to the at least one network side device, and reporting the first downlink corrected POA corresponding to the at least one network side device and at least one RSTD to a Location Management Function, LMF; or

determining, based on the first downlink corrected POA corresponding to the at least one network side device, a Phase Difference of Arrival, PDOA, between the first downlink corrected POAs of every two network side devices; determining, based on a downlink TOA corresponding to the at least one network side device, an RSTD between the downlink TOAs of every two network side devices; and reporting obtained at least one PDOA and at least one RSTD to an LMF; where the downlink TOA corresponding to each network side device is obtained by measuring a first PRS sent by the each network side device.

In an optional embodiment, the network side device includes a base station and/or a Transmission Reception Point, TRP.

In a second aspect, a carrier phase positioning method is provided according to an embodiment of the present disclosure. The method is applied to a network side device, and includes:

transmitting, at a respective moment, a Positioning Reference Signal, PRS, on an identical downlink PRS resource to a terminal using an identical downlink transmission channel and an identical beam direction, where the PRS is used to provide a downlink Phase of Arrival, POA, and the downlink POA is used for determination of a location of the terminal after correction of the downlink POA based on adjustment information about Autonomous Time Adjustment, ATA, and/or Autonomous Frequency Adjustment, AFA.

In the carrier phase positioning method provided by embodiments of the present disclosure, the network side device sends, at a respective moment, a PRS on an identical PRS resource to the terminal using an identical downlink transmission channel and an identical beam direction, improving the accuracy of carrier phase positioning.

In an optional embodiment, the network side device includes a base station and/or a Transmission Reception Point, TRP.

In a third aspect, a carrier phase positioning method is provided according to an embodiment of the present disclosure. The method is applied to a terminal, and includes:

sending adjustment information about Autonomous Time Adjustment, ATA, and/or Autonomous Time Adjustment, ATA, performed by the terminal to at least one network side device;

transmitting a Sounding Reference Signal for positioning, SRS-Pos, on an identical SRS-Pos resource to the at least one network side device using an identical transmission channel and an identical beam direction.

In the carrier phase positioning method provided by embodiments of the present disclosure, each network side device, upon receiving the adjustment information about ATA and/or AFA sent by the terminal, may correct a measured uplink POA according to the adjustment information about ATA and/or AFA to obtain an uplink corrected POA for determining the location of the terminal, which may eliminate the influence of ATA and AFA performed by the terminal on carrier phase positioning, and thus improve the accuracy of carrier phase positioning.

In an optional embodiment, the sending the adjustment information to the at least one network side device includes:

sending any one or more of following information to the at least one network side device:

an adjustment amount of ATA;

an adjustment amount of AFA;

a rate of change of timing deviation of a crystal oscillator of the terminal and a rate of change of frequency deviation of the crystal oscillator of the terminal;

a timestamp at which ATA becomes effective, which refers to a moment at which the terminal performs ATA; and

a timestamp at which AFA becomes effective, which refers to a moment at which the terminal performs AFA.

In an optional embodiment, the network side device includes a base station and/or a Transmission Reception Point, TRP.

In a fourth aspect, a carrier phase positioning method is provided according to an embodiment of the present disclosure. The method is applied to a network side device, and includes:

receiving adjustment information about Autonomous Time Adjustment, ATA, and/or Autonomous Frequency Adjustment, AFA, performed by a first terminal; and

correcting a first uplink Phase of Arrival, POA, based on the adjustment information about ATA and/or AFA to obtain a first uplink corrected POA; where the first uplink corrected POA is used to assist in determining a location of the first terminal, and the first uplink POA is obtained by measuring a first uplink Sounding Reference Signal for positioning, SRS-Pos, sent by the first terminal.

In an optional embodiment, prior to the correcting the first uplink POA based on the adjustment information about ATA and/or AFA, the method further includes:
receiving a first SRS-Pos sent by the first terminal and measure the received first SRS-Pos, within an SRS-Pos duration.

In an optional embodiment, the receiving the adjustment information about ATA and/or AFA performed by the first terminal includes:

receiving the adjustment information about ATA and/or AFA which is sent directly from the first terminal; or
receiving the adjustment information about ATA and/or AFA which is forwarded by a Location Management Function, LMF.

In an optional embodiment, after obtaining the first uplink corrected POA, the method further includes:
transmitting the first uplink corrected POA and an uplink Time of Arrival, TOA, to the LMF, the uplink TOA being obtained by measuring a first SRS-Pos sent by the first terminal.

In an optional embodiment, the method further includes:

determining a second uplink corrected POA corresponding to the first terminal based on the adjustment information and the first uplink corrected POA, and
sending the second uplink corrected POA and the uplink TOA to the LMF.

In an optional embodiment, the network side device includes a base station and/or a Transmission Reception Point, TRP.

In a fifth aspect, a carrier phase positioning method is provided according to an embodiment of the present disclosure, applied to a Location Management Function, LMF. The method includes:

receiving an uplink corrected Phase of Arrival, POA, sent by at least one network side device, where the uplink corrected POA is obtained by correcting an uplink POA based on adjustment information about Autonomous Time Adjustment, ATA, and/or Autonomous Frequency Adjustment, AFA, and the uplink POA is obtained by performing measurement on an uplink Sounding Reference Signal for positioning, SRS-Pos;
determining a location of a first terminal based on the uplink corrected POA sent by the at least one network side device.

In an optional embodiment, the determining the location of the first terminal based on the uplink corrected POA sent by the at least one network side device includes:
determining the location of the first terminal based on the uplink corrected POA and an uplink Time of Arrival, TOA, sent by the at least one network side device and a differential correction quantity of timing deviation between every two network side devices; where the differential correction quantity of timing deviation between every two network side devices is pre-stored by the LMF or reported by network side devices, and the uplink TOA is obtained by performing measurement on an SRS-Pos.

In an optional embodiment, the method further includes:

receiving the adjustment information about ATA and/or AFA sent by the first terminal; and
sending the adjustment information about ATA and/or AFA to at least one network side device serving the first terminal; or sending the adjustment information about ATA and/or AFA to at least one network side device, a distance from which to the first terminal is less than a set distance threshold.

In a sixth aspect, a terminal is provided according to an embodiment of the present disclosure. The terminal includes:

a downlink correction unit, used to correct a first downlink Phase of Arrival, POA, based on adjustment information about Autonomous Time Adjustment, ATA, and/or Autonomous Frequency Adjustment, AFA, performed by the terminal to obtain a first downlink corrected POA, where the first downlink POA is obtained by performing measurement on a first downlink Positioning Reference Signal, PRS, sent by at least one network side device; and

a downlink determination unit, used to determine a location of the terminal based on the first downlink corrected POA

In a seventh aspect, a network side device is provided according to an embodiment of the present disclosure, including:

a downlink transmitting unit, used to transmit, at a respective moment, a Positioning Reference Signal, PRS, on an identical downlink PRS resource to a terminal using an identical downlink transmission channel and an identical beam direction, where the PRS is used to provide a downlink Phase of Arrival, POA, and the downlink POA is used for determination of a location of the terminal after correction of the downlink POA based on adjustment information about Autonomous Time Adjustment, ATA, and/or Autonomous Frequency Adjustment, AFA.

In an eighth aspect, a terminal is provided according to an embodiment of the present disclosure, including a memory, a transceiver and a processor,

the memory is used to store computer instructions;
the transceiver is used to receive and transmit data under control of the processor; and
the processor is used to read a computer program in the memory and perform:

correcting a first downlink Phase of Arrival, POA, based on adjustment information about Autonomous Time Adjustment, ATA, and/or Autonomous Frequency Adjustment, AFA, performed by the terminal to obtain a first downlink corrected POA, where the first downlink POA is obtained by performing measurement on a first downlink Positioning Reference Signal, PRS, sent by at least one network side device; and
determining a location of the terminal based on the first downlink corrected POA.

In an optional embodiment, the processor is specifically used to:

perform ATA and/or AFA within a non-PRS duration; and
receive a first PRS sent by the at least one network side device and perform measurement on the received first PRS, within a PRS duration.

In an optional embodiment, the processor is used to:

determine a second downlink corrected POA based on the adjustment information and the first downlink corrected POA; and
determine the location of the terminal based on the second downlink corrected POA corresponding to the at least one network side device.

In an optional embodiment, the processor is used to:

determine a Reference Signal Time Difference, RSTD, between downlink Time of Arrivals, TOAs, of every two network side devices based on the downlink TOA corresponding to the at least one network side device, and report the first downlink corrected POA corresponding to the at least one network side device and at least one RSTD to a Location Management Function, LMF; or
determine, based on the first downlink corrected POA corresponding to the at least one network side device, a Phase Difference of Arrival, PDOA, between the first downlink corrected POAs of every two network side devices; determine, based on a downlink TOA corresponding to the at least one network side device, an RSTD between the downlink TOAs of every two network side devices; and report obtained at least one PDOA and at least one RSTD to an LMF; where the downlink TOA corresponding to each network side device is obtained by measuring a first PRS sent by the each network side device..

In an optional embodiment, the network side device includes a base station and/or a Transmission Reception Point, TRP.
In a ninth aspect, a network side device is provided according to an embodiment of the present disclosure, including a memory, a transceiver and a processor:

the memory is used to store computer instructions; and
the transceiver is used to, under control of the processor, transmit, at a respective moment, a Positioning Reference Signal, PRS, on an identical downlink PRS resource to a terminal using an identical downlink transmission channel and an identical beam direction, where the PRS is used to provide a downlink Phase of Arrival, POA, and the downlink POA is used for determination of a location of the terminal after correction of the downlink POA based on adjustment information about Autonomous Time Adjustment, ATA, and/or Autonomous Frequency Adjustment, AFA.

In an optional embodiment, the network side device includes a base station and/or a Transmission Reception Point, TRP.

In a tenth aspect, an embodiment of the present disclosure provides a carrier phase positioning system, the system includes a terminal and a network side device; the terminal being the terminal described in any one of the eighth aspect; the network side device being the network side device described in any one of the ninth aspect.

In an eleventh aspect, a terminal is provided according to an embodiment of the present disclosure, including:

an uplink adjustment unit, used to send adjustment information about Autonomous Time Adjustment, ATA, and/or Autonomous Time Adjustment, ATA, performed by the terminal to at least one network side device; and
an uplink transmitting unit, used to transmit a Sounding Reference Signal for positioning, SRS-Pos, on an identical SRS-Pos resource to the at least one network side device using an identical transmission channel and an identical beam direction.

In a twelfth aspect, a network side device is provided according to an embodiment of the present disclosure, including:

a first uplink receiving unit, used to receive adjustment information about Autonomous Time Adjustment, ATA, and/or Autonomous Frequency Adjustment, AFA, performed by a first terminal; and
an uplink correction unit, used to correct a first uplink Phase of Arrival, POA, based on the adjustment information about ATA and/or AFA to obtain a first uplink corrected POA; where the first uplink corrected POA is used to assist in determining a location of the first terminal, and the first uplink POA is obtained by measuring a first uplink Sounding Reference Signal for positioning, SRS-Pos, sent by the first terminal.

In a thirteenth aspect, a Location Management Function, LMF, is provided according to an embodiment of the present disclosure, including:

a second uplink receiving unit, used to receive an uplink corrected Phase of Arrival, POA, sent by at least one network side device, where the uplink corrected POA is obtained by correcting an uplink POA based on adjustment information about Autonomous Time Adjustment, ATA, and/or Autonomous Frequency Adjustment, AFA, and the uplink POA is obtained by performing measurement on an uplink Sounding Reference Signal for positioning, SRS-Pos; and
an uplink determination unit, used to determine a location of a first terminal based on the uplink corrected POA sent by the at least one network side device.

In a fourteenth aspect, a terminal is provided according to an embodiment of the present disclosure, including a memory, a transceiver and a processor;

the memory is used to store computer instructions;
the transceiver is used, under control of the processor, to

send adjustment information about Autonomous Time Adjustment, ATA, and/or Autonomous Time Adjustment, ATA, performed by the terminal to at least one network side device;
transmit a Sounding Reference Signal for positioning, SRS-Pos, on an identical SRS-Pos resource to the at least one network side device using an identical transmission channel and an identical beam direction.

In an optional embodiment, the transceiver is further used to send any one or more of following information to the at least one network side device:

an adjustment amount of ATA;
an adjustment amount of AFA;
a rate of change of timing deviation of a crystal oscillator of the terminal and a rate of change of frequency deviation of the crystal oscillator of the terminal;
a timestamp at which ATA becomes effective, which refers to a moment at which the terminal performs ATA; and
a timestamp at which AFA becomes effective, which refers to a moment at which the terminal performs AFA.

In a fifteenth aspect, a network side device is provided according to an embodiment of the present disclosure, including a memory, a transceiver and a processor:

the memory is used to store computer instructions;
the transceiver is used to receive and transmit data under control of the processor; and
the processor is used to read a computer program in the memory and perform:

controlling the transceiver to receive adjustment information about Autonomous Time Adjustment, ATA, and/or Autonomous Frequency Adjustment, AFA, performed by a first terminal; and
correcting a first uplink Phase of Arrival, POA, based on the adjustment information about ATA and/or AFA to obtain a first uplink corrected POA; where the first uplink corrected POA is used to assist in determining a location of the first terminal, and the first uplink POA is obtained by measuring a first uplink Sounding Reference Signal for positioning, SRS-Pos, sent by the first terminal.

In an optional embodiment, the processor is used to:
control the transceiver to receive a first SRS-Pos sent by the first terminal and measure the received first SRS-Pos, within an SRS-Pos duration.

In an optional embodiment, the transceiver is specifically used to:

receive the adjustment information about ATA and/or AFA which is sent directly from the first terminal; or
receive the adjustment information about ATA and/or AFA which is forwarded by a Location Management Function, LMF.

In an optional embodiment, the transceiver is further used to:
transmit the first uplink corrected POA and an uplink Time of Arrival, TOA, to the LMF, the uplink TOA being obtained by measuring a first SRS-Pos sent by the first terminal.

In an optional embodiment, the processor is further used to:

determine a second uplink corrected POA corresponding to the first terminal based on the adjustment information and the first uplink corrected POA, the second uplink corrected POA represents a correction value for a second uplink POA; and
send the second uplink corrected POA and the uplink TOA to the LMF.

In a sixteenth aspect, a Location Management Function, LMF, is provided according to an embodiment of the present disclosure, including a memory, a transceiver and a processor;

the memory is used to store computer instructions;
the transceiver is used to receive and transmit data under control of the processor; and
the processor is used to read a computer program in the memory and perform:

controlling the transceiver to receive an uplink corrected Phase of Arrival, POA, sent by at least one network side device, where the uplink corrected POA is obtained by correcting an uplink POA based on adjustment information about Autonomous Time Adjustment, ATA, and/or Autonomous Frequency Adjustment, AFA, and the uplink POA is obtained by performing measurement on an uplink Sounding Reference Signal for positioning, SRS-Pos; and
determining a location of a first terminal based on the uplink corrected POA sent by the at least one network side device.

In an optional embodiment, the processor is used to:
determine the location of the first terminal based on the uplink corrected POA and an uplink Time of Arrival, TOA, sent by the at least one network side device and a differential correction quantity of timing deviation between every two network side devices; where the differential correction quantity of timing deviation between every two network side devices is pre-stored by the LMF or reported by network side devices, and the uplink TOA is obtained by performing measurement on an SRS-Pos.

In an optional embodiment, the transceiver is further used to:

receive the adjustment information about ATA and/or AFA sent by the first terminal; and
send the adjustment information about ATA and/or AFA to at least one network side device serving the first terminal; or
send the adjustment information about ATA and/or AFA to at least one network side device, a distance from which to the first terminal is less than a set distance threshold.

In a seventeenth aspect, a carrier phase positioning system is provided according to an embodiment of the present disclosure, the system includes a terminal, a network side device, and a positioning management function entity LMF, the terminal being the terminal described in any one of the fourteenth aspect; the network side device being the network side device described in any one of the fifteenth aspect; and the LMF being the network side device described in any one of the sixteenth aspect.

In an eighteenth aspect, a computer-readable storage medium is provided according to an embodiment of the present disclosure, the storage medium storing computer instructions thereon; the computer instructions, when executed by a processor, realize a method as described in any one of the first aspect.

In a nineteenth aspect, a computer-readable storage medium is provided according to an embodiment of the present disclosure, the storage medium storing computer instructions thereon; the computer instructions, when executed by a processor, realize a method as described in any one of the second aspect.

In a twentieth aspect, a computer-readable storage medium is provided according to an embodiment of the present disclosure, the storage medium storing computer instructions thereon; the computer instructions, when executed by a processor, realize a method as described in any one of the third aspect.

In a twenty-first aspect, a computer-readable storage medium is provided according to an embodiment of the present disclosure, the storage medium storing computer instructions thereon; the computer instructions, when executed by a processor, realize a method as described in any one of the fourth aspect.

In a twenty-second aspect, a computer-readable storage medium is provided according to an embodiment of the present disclosure, the storage medium storing computer instructions thereon; the computer instructions, when executed by a processor, realize a method as described in any one of the fifth aspect.

The technical effects brought about by any of the realization in the fourth to twenty-second aspects can be seen in the technical effects brought about by the realization in the first to third aspects, and will not be repeated here.

## BRIEF DESCRIPTION OF THE DRAWINGS

In order to more clearly illustrate technical solutions in embodiments of the present disclosure or the related technology, drawings to be used in the description of the embodiments or the related technology are briefly introduced hereinafter. It is obvious that the drawings described as follows are only for some of the embodiments of the application, and other drawings can be obtained by the ordinary skilled in the art based on the described drawings without paying creative efforts.

FIG. 1 shows a diagram of an application scenario to which carrier phase positioning methods according to embodiments of the present disclosure apply;

FIG. 2 shows a schematic diagram of an interaction flowchart of a downlink carrier phase positioning method provided by an embodiment of the present disclosure;

FIG. 3 shows a schematic diagram of a downlink carrier phase-time relationship provided by an embodiment of the present disclosure;

FIG. 4 shows a schematic diagram of a downlink carrier phase-time relationship provided by an embodiment of the present disclosure;

FIG. 5 shows a schematic diagram of another downlink carrier phase-time relationship provided by an embodiment of the present disclosure;

FIG. 6 shows a schematic diagram of another downlink carrier phase-time relationship provided by an embodiment of the present disclosure;

FIG. 7 shows a schematic diagram of an interaction flowchart of an uplink carrier phase positioning method provided by an embodiment of the present disclosure;

FIG. 8 shows a schematic diagram of an uplink carrier phase-time relationship provided by an embodiment of the present disclosure;

FIG. 9 shows a schematic diagram of another uplink carrier phase-time relationship provided by an embodiment of the present disclosure;

FIG. 10 shows a schematic diagram of another uplink carrier phase-time relationship provided by an embodiment of the present disclosure;

FIG. 11 shows a flow diagram of a carrier phase positioning method provided by an embodiment of the present disclosure;

FIG. 12 shows a flow diagram of a carrier phase positioning method provided by an embodiment of the present disclosure;

FIG. 13 shows a flow diagram of a carrier phase positioning method provided by an embodiment of the present disclosure;

FIG. 14 shows a flow diagram of a carrier phase positioning method provided by an embodiment of the present disclosure;

FIG. 15 is a block diagram of a structure of a terminal provided by an embodiment of the present disclosure;

FIG. 16 shows a block diagram of a structure of a terminal provided by an embodiment of the present disclosure;

FIG. 17 shows a block diagram of a structure of a network side device provided by an embodiment of the present disclosure;

FIG. 18 shows a block diagram of the structure of another network side device provided by an embodiment of the present disclosure;

FIG. 19 shows a block diagram of a structure of an LMF provided by an embodiment of the present disclosure;

FIG. 20 shows a schematic diagram of a structure of a terminal provided by an embodiment of the present disclosure;

FIG. 21 is a schematic diagram of a structure of a network side device provided by an embodiment of the present disclosure;

FIG. 22 shows a schematic diagram of a structure of a terminal provided by an embodiment of the present disclosure;

FIG. 23 shows a schematic diagram of a structure of a network side device provided by an embodiment of the present disclosure; and

FIG. 24 shows a schematic diagram of a structure of an LMF provided by an embodiment of the present disclosure.

## DETAILED DESCRIPTION OF THE EMBODIMENTS

Specific embodiments of the present disclosure are described in detail below in conjunction with the drawings. It should be understood that the specific embodiments described herein are intended to merely illustrate and explain the present disclosure rather than to limit the present disclosure.

It is to be noted that "first" and "second" in embodiments of the present disclosure are used to distinguish similar objects, and are not used to describe a particular order or sequence. The character "and/or" in the embodiments of the present disclosure, describing an association relationship of associated objects, indicates that three kinds of relationships may exist; e.g., A and/or B may be indicated as three cases of: A alone, both A and B, and B alone. The character "/" generally indicates an "or" relationship between a former associated object and a latter associated object.

Network architecture and business scenarios described in the embodiments of the present disclosure are intended to more clearly illustrate technical solutions of the embodiments of the present disclosure, and do not constitute a limitation on the technical solutions provided by the embodiments of the present disclosure. A person of ordinary skill in the art may know that, with the evolution of the network architecture and the emergence of new business scenarios, the technical solutions provided by the embodiments of the present disclosure are equally applicable to similar technical problems.

In 5G positioning system, crystal oscillators used in a 5G base station and a terminal have a frequency deviation; e.g., a crystal oscillator of a UE may have a maximum frequency deviation of 0.1 ppm. Consequently, the terminal may perform ATA and AFA by default. Since the 5G positioning system employs PRS and SRS-Pos which are discontinuous, the frequency deviation of the crystal oscillator of the terminal as well as ATA and AFA performed by the terminal may result in cycle slip of the carrier phase measurement quantity, degrading the accuracy of carrier phase positioning.

In view of the above, a carrier phase positioning method, a terminal, a network side device, and an LMF are provided according to embodiments of the present disclosure. The carrier phase positioning method includes: correcting a first downlink POA based on adjustment information about ATA and/or AFA performed by the terminal to obtain a first downlink corrected POA; and determining a location of the terminal based on the first downlink corrected POA. The method utilizes the adjustment information about ATA and/or AFA to correct the POA, which can eliminate the influence of ATA and AFA performed by the terminal on carrier phase positioning, and thus improve the accuracy of carrier phase positioning.

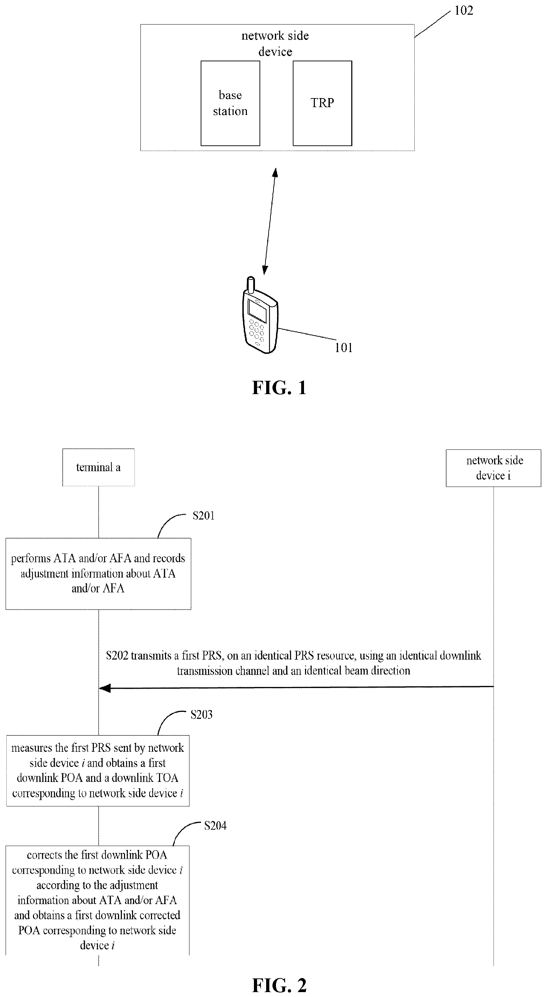

FIG. 1 is a schematic structural diagram of a carrier phase positioning system which is applicable to embodiments of the present disclosure. Embodiments of the present disclosure may be applied to a carrier phase positioning system. The carrier phase positioning system at least includes one terminal 101 and one network side device 102. The network side device 102 may be a base station or a Transmit Receive Point, TRP.

In an embodiment, the network side device 102 may send a PRS to the terminal 101; the terminal 101, in reception of the PRS sent by the network side device 102, may perform a carrier phase measurement and a time of arrival measurement on the PRS to obtain a downlink POA measurement quantity and a downlink Time of Arrival, TOA, measurement quantity; in addition, based on the downlink POA measurement quantity and the downlink TOA measurement quantity, a location of the terminal 101 is determined.

Furthermore, in an embodiment, the terminal 101 may send an SRS-Pos to the network side device 102; the network side device 102, in reception of the SRS-Pos sent by the terminal 101, may perform a carrier phase measurement and a time of arrival measurement on the SRS-Pos to obtain an uplink POA measurement quantity and an uplink TOA measurement quantity, and send the uplink POA measurement quantity and the uplink TOA measurement quantity to a Location Management Function, LMF, and the LMF determines a location of the terminal 101 based on the uplink POA measurement quantity and uplink TOA measurement quantity.

Carrier phase positioning methods provided in the present disclosure include a downlink carrier phase positioning method and an uplink carrier phase positioning method, and the two methods are described in detail in the following according to specific embodiments, respectively.

FIG. 2 illustrates an interaction flowchart of a downlink carrier phase positioning method according to an embodiment of the present disclosure, and FIG. 2 is exemplarily illustrated based on network side device *i* and terminal *a*. Network side device *i* may be an arbitrary network side device, and terminal *a* refers to an arbitrary terminal. As shown in FIG. 2, the method includes the following steps S201 to S204.

In step S201, terminal *a* performs ATA and/or AFA and records adjustment information about ATA and/or AFA.

In an optional embodiment, during an initial PRS duration before terminal *a* performs ATA and/or AFA, network side device i may separately send, at different moments, a PRS on an identical PRS resource to the terminal using an identical downlink transmission channel and an identical beam direction; terminal *a*, in reception of the PRS sent by network side device i, may perform a carrier phase measurement and a TOA measurement to obtain corresponding POA and TOA measurement quantities.

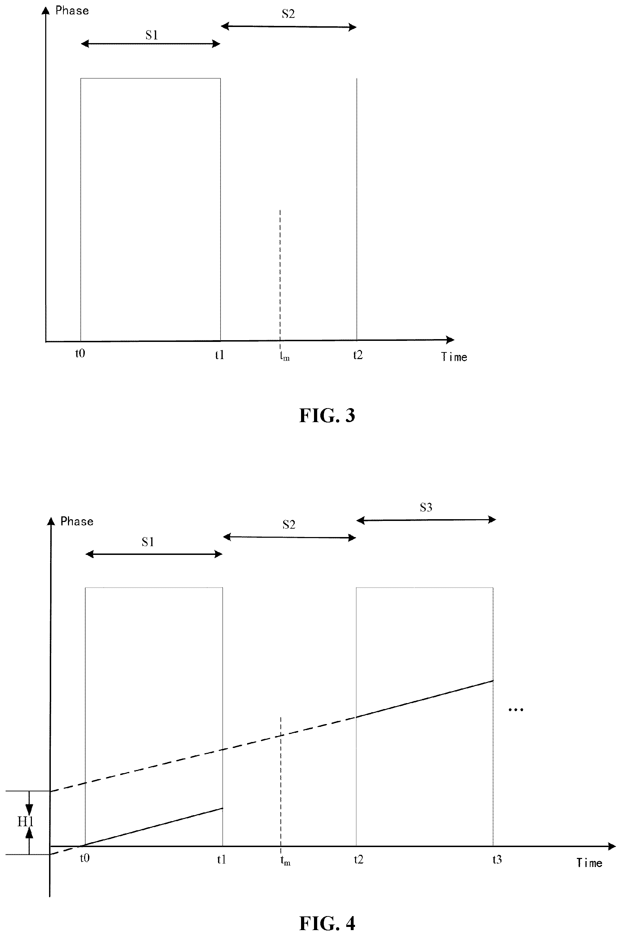

Specifically, as shown in FIG. 3, duration S1 is the initial PRS duration, $t_0$ is an initial moment of duration S1, $t_1$ is an end moment of duration S1, duration S2 is a non-PRS duration, $t_m$ is an adjustment moment at which the terminal performs ATA and/or AFA, and $t_2$ is an end moment of duration S2.

Assuming that terminal *a* receives a PRS sent by network side device *i* within the initial PRS duration, i.e., duration S1, terminal *a* may perform a carrier phase measurement and a TOA measurement on the received PRS to obtain corresponding POA and TOA measurement quantities.

At moment $t_m$ within the non-PRS duration, i.e., duration S2, terminal *a* performs ATA and/or AFA and records adjustment information about ATA and/or AFA; here, $t_m$ is an arbitrary moment in duration S2.

In step S202, network side device *i* transmits a first PRS, on an identical PRS resource, to terminal *a* using an identical downlink transmission channel and an identical beam direction.

Network side device *i* may send, using the identical downlink transmission channel and the identical beam direction, a PRS on the identical PRS resource to terminal *a* at a first moment within the PRS duration, where the PRS corresponding to the first moment is the first PRS.

In step S203, terminal *a* measures the first PRS sent by network side device *i* and obtains a first downlink POA and a downlink TOA corresponding to network side device *i*.

In step S204, terminal *a* corrects the first downlink POA corresponding to network side device *i* according to the adjustment information about ATA and/or AFA and obtains a first downlink corrected POA corresponding to network side device *i*.

With the above method, terminal *a* may separately measure the first PRS sent by each network side device, obtain the first downlink POA and the downlink TOA corresponding to each network side device, and obtain multiple first downlink corrected POAs based on adjustment information about ATA and/or AFA. Terminal *a* may determine, based on the obtained multiple first downlink corrected POAs and multiple downlink TOAs, the location of terminal *a*.

The foregoing are to be described in detail below by way of several specific embodiments.

In some embodiments, terminal *a* corrects the first downlink POA corresponding to network side device *i* at the first moment based on the adjustment information about ATA and/or AFA and obtains the first downlink corrected POA corresponding to network side device *i*, which may be described in detail hereinafter by means of three embodiments respectively.

A first embodiment

Exemplarily, as shown in FIG. 4, at moment $t_1$ within duration S1, terminal *a* receives a PRS sent by network side device *i*; terminal *a* performs a carrier phase measurement and a TOA measurement on the received PRS to obtain an initial downlink POA measurement quantity and an initial downlink TOA measurement quantity corresponding to moment $t_1$, where the initial downlink POA is POA1, $POA1 = \lambda\ \phi_a^i(t_1)$; and terminal *a* may determine the location of terminal *a* at moment $t_1$ based on the initial downlink POA measurement quantity and the initial downlink TOA measurement quantity.

In the non-PRS duration, i.e., in duration S2, terminal *a* may perform ATA at moment $t_m$ and record adjustment information about ATA, where the adjustment information about ATA at moment $t_m$ is assumed to be $\delta t_{ATA}(t_m)$. As terminal *a* carries out ATA at moment $t_m$, an intercept of a phase-time curve may change but a slope of the phase-time curve may not change; as shown in FIG. 4, an amount of change in the intercept is H1.

At moment $t_3$ in duration S3, in reception of a first PRS sent by network side device *i*, terminal *a* may perform a carrier phase measurement and a TOA measurement on the received first PRS to obtain a first downlink POA and a downlink TOA corresponding to moment $t_3$, where the first downlink POA is assumed to be $\lambda\,\phi\,_a^{\prime i}(t_3)$.

Terminal *a* may correct, based on the adjustment information $\delta\,t_{ATA}(t_m)$ about ATA, the first downlink POA corresponding to network side device *i* according to formula 1 and formula 2, and obtain a first downlink corrected POA corresponding to moment $t_2$;

$$\lambda\,\phi\,_a^i(t_3) = \lambda\,\phi\,_a^{\prime i}(t_3) - c * \delta\,t_{ATA}(t_m) \quad \text{(formula 1)}$$

$$\delta\,d_a^i(t_m) = \delta\,d_a^i(t_0) + c * \delta\,t_{ATA}(t_m) \quad \text{(formula 2)}$$

Here, c denotes the speed of light and takes the value of 3.0*10^8 (m/s); $\lambda\,\phi\,_a^i(t_3)$ is the first downlink corrected POA corresponding to moment $t_3$; $\delta\,t_{ATA}(t_m)$ is in units of seconds; $\delta\,d_a^i(t_m)$ denotes a difference value of timing deviation between network side device *i* and terminal *a* at moment $t_m$; $\delta\,d_a^i(t_0)$ denotes a difference value of timing deviation between network side device *i* and terminal *a* at moment $t_0$.

A second embodiment

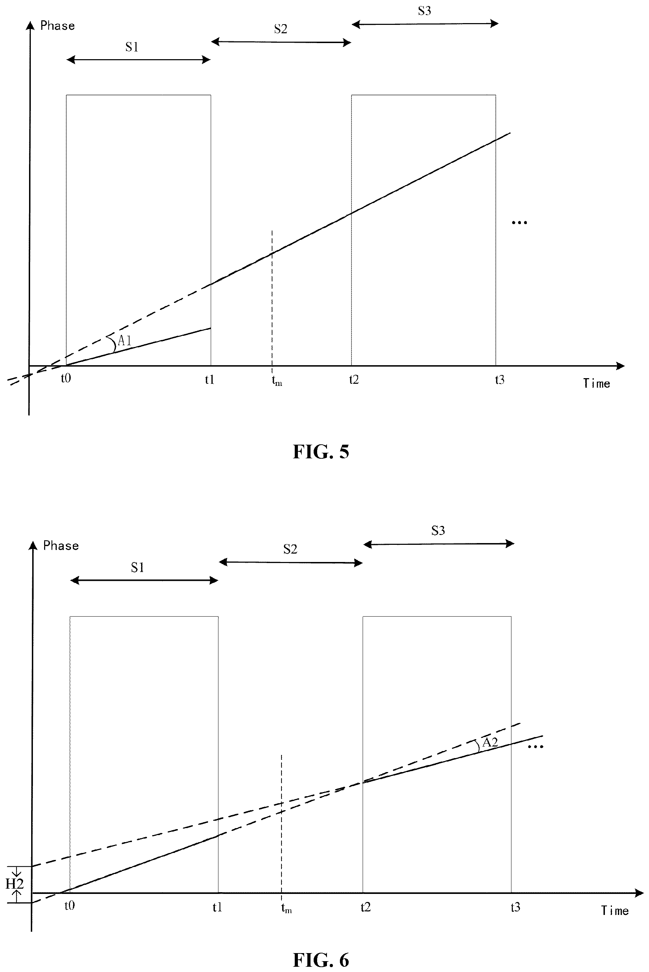

Exemplarily, as shown in FIG. 5, at moment $t_1$ within duration S1, terminal *a* receives a PRS sent by network side device *i*; terminal *a* performs a carrier phase measurement and a TOA measurement on the received PRS to obtain an initial downlink POA measurement quantity and an initial downlink TOA measurement quantity corresponding to moment $t_1$, where the initial downlink POA is POA1, $POA1 = \lambda\,\phi\,_a^i(t_1)$; and terminal *a* may determine the location of terminal *a* at moment $t_1$ based on the initial downlink POA measurement quantity and the initial downlink TOA measurement quantity.

In the non-PRS duration, i.e., in duration S2, terminal *a* may perform AFA at moment $t_m$ and record adjustment information about AFA. Assuming that a frequency deviation of crystal oscillators after adjustment, i.e., at moment $t_m$ is $\delta\,f_a^i(t_m)$ and a frequency deviation of the crystal oscillators before adjustment is $\delta\,f_a^i(t_0)$, then the adjustment information about AFA may be determined using formula 3. As terminal *a* carries out AFA at moment $t_m$, a slope of a phase-time curve may change but an intercept of the phase-time curve may not change; as shown in FIG. 5, an amount of change in the slope is a slope indicated by $\angle A1$.

$$\delta\,t_{AFA}(t_m) = \delta\,f_a^i(t_m) - \delta\,f_a^i(t_0) \quad \text{(formula 3)}$$

Here, $\delta\,t_{AFA}(t_m)$ denotes the adjustment information about AFA.

At moment $t_3$ in duration S3, in reception of a first PRS sent by network side device *i*, terminal *a* may perform a carrier phase measurement and a TOA measurement on the received first PRS to obtain a first downlink POA and a downlink TOA corresponding to moment $t_3$, where the first downlink POA is assumed to be $\lambda\,\phi\,_a^{\prime i}(t_3)$.

Terminal *a* may correct, based on the adjustment information $\delta\,t_{AFA}(t_m)$ about AFA, the first downlink POA corresponding to network side device *i* according to formulas 4, 5, 6 and 7, and obtain a first downlink corrected POA corresponding to network side device *i*;

$$\lambda\,\phi\,_a^i(t_3) = \lambda\,\phi\,_a^{\prime i}(t_3) - (t_3 - t_m) * \delta\,t_{AFA}(t_m) \text{(formula 4)}$$

$$\delta\,d_a^i(t_3) = \delta\,d_a^{\prime i}(t_3) - (t_3 - t_m) * \delta\,t_{AFA}(t_m) \text{(formula 5)}$$

$$\delta\,d_a^i(t_3) = \delta\,d_a^i(t_0) + 1.0714 * (t_3 - t_0) * \lambda\,\delta\,f_a^i(t_0) \text{(formula 6)}$$

$$\delta\,d_a^{\prime i}(t_3) = \delta\,d_a^i(t_0) + 1.0714 * (t_m - t_0) * \lambda\,\delta\,f_a^i(t_0) + 1.0714 * (t_3 - t_m) * \delta\,f_a^i(t_m)$$
$$\text{(formula 7)}$$

Here, $\lambda\,\phi_a^i(t_3)$ is the first downlink corrected POA corresponding to moment $t_3$; $\delta\,d_a^i(t_3)$ denotes a difference value of timing deviation at moment $t_3$ between network side device $i$ and terminal $a$ not performing AFA adjustment; $\delta\,d_a'^i(t_3)$ denotes a difference value of timing deviation at moment $t_3$ between network side device $i$ and terminal $a$ after performing AFA adjustment; $\delta\,d_a^i(t_0)$ denotes a difference value of timing deviation between network side device $i$ and terminal $a$ at moment $t_0$.

A third embodiment

Exemplarily, as shown in FIG. 6, at moment $t_1$ within duration S1, terminal $a$ receives a PRS sent by network side device $i$; terminal $a$ performs a carrier phase measurement and a TOA measurement on the received PRS to obtain an initial downlink POA measurement quantity and an initial downlink TOA measurement quantity corresponding to moment $t_1$, where the initial downlink POA is POA1, $POA1 = \lambda\,\phi_a^i(t_1)$; and terminal $a$ may determine the location of terminal $a$ at moment $t_1$ based on the initial downlink POA measurement quantity and the initial downlink TOA measurement quantity.

In the non-PRS duration, i.e., in duration S2, terminal $a$ may perform ATA and AFA at moment $t_m$ and record adjustment information about ATA and AFA, where it is assumed that the adjustment information about ATA at moment $t_m$ is $\delta\,t_{ATA}(t_m)$ and the adjustment information about AFA at moment $t_m$ is $\delta\,t_{AFA}(t_m)$. As terminal $a$ performs ATA and AFA at moment $t_m$, both a slope and an intercept of a phase-time curve change; as shown in FIG. 6, an amount of change in the slope is a slope indicated by $\angle A2$, and an amount of change in the intercept is H2.

At moment $t_3$ in duration S3, in reception of a first PRS sent by network side device $i$, terminal $a$ may perform a carrier phase measurement and a TOA measurement on the received first PRS to obtain a first downlink POA and a downlink TOA corresponding to moment $t_3$, where the first downlink POA is assumed to be $\lambda\,\phi_a'^i(t_3)$.

Terminal $a$ may correct, based on the adjustment information $\delta t_{ATA}(t_m)$ about ATA and the adjustment information $\delta\,t_{AFA}(t_m)$ about AFA, the first downlink POA corresponding to network side device $i$ according to formula 8 and formula 9, and obtain a first downlink corrected POA corresponding to network side device $i$;

$$\lambda\,\phi_a^i(t_3) = \lambda\,\phi_a'^i(t_3) - c*\,\delta\,t_{ATA}(t_m) - (t_3 - t_m)*\,\delta\,t_{AFA}(t_m) \quad (\text{formula 8})$$

$$\delta\,d_a^i(t_3) = \delta\,d_a'^i(t_3) - c*\,\delta\,t_{ATA}(t_m) - (t_3 - t_m)*\,\delta\,t_{AFA}(t_m) \quad (\text{formula 9})$$

In any of the above ways, terminal $a$ may separately determine the first downlink corrected POA and the downlink TOA corresponding to each network side device, then terminal $a$ may determine the location of terminal $a$ based on the first downlink corrected POA and the downlink TOA corresponding to the each network side device.

In an embodiment, terminal $a$ may determine, based on the first downlink corrected POA and the downlink TOA corresponding to each network side device, the location of terminal $a$ at moment $t_3$ by performing united computation of ambiguity of whole cycles and location of terminal using an Extended Kalman Filter, EKF, algorithm and an MLAMDA algorithm, and report a determined location of terminal $a$ to LMF.

In another embodiment, terminal $a$ may determine a Reference Signal Time Difference, RSTD, between downlink TOAs of every two network side devices based on downlink TOAs corresponding to respective network side devices, and report the first downlink corrected POA corresponding to each network side device and at least one RSTD to the LMF. The LMF, in reception of the first downlink corrected POA corresponding to each network side device and the at least one RSTD reported by terminal $a$, may determine, based on the first downlink corrected POA corresponding to each network side device and the at least one RSTD, the location of terminal $a$ at moment $t_3$ by performing united computation of ambiguity of whole cycles and location of terminal using algorithms such as the EKF algorithm and the MLAMDA algorithm.

In another embodiment, terminal $a$ may determine, based on downlink TOAs corresponding to respective network side devices, an RSTD between downlink TOAs of every two network side devices; determine, based on first downlink corrected POAs corresponding to respective network side devices, a difference between carrier phase measurement quantities of every two network side devices, i.e., a Phase Difference of Arrival, PDOA, between first downlink corrected POAs of every two network side devices; and report multiple determined PDOAs and at least one determined RSTD to the LMF. The LMF, in reception of the multiple PDOAs and the at least one RSTD reported by terminal $a$, may determine, based on the multiple PDOAs and the at least one RSTD, the location of terminal $a$ at moment $t_3$ by performing united computation of ambiguity of whole cycles and UE location using algorithms such as the EKF algorithm and the MLAMDA algorithm.

In other embodiments, terminal *a* may determine a second downlink corrected POA corresponding to network side device *i* based on the adjustment information about ATA and/or AFA and the first downlink corrected POA corresponding to network side device *i*. The second downlink corrected POA represents a corrected value of a second downlink POA corresponding to network side device *i* within a PRS duration. The above may be described in detail hereinafter by means of three embodiments respectively.

A fourth embodiment

Exemplarily, as shown in FIG. 4, at moment $t_1$ within duration S1, terminal *a* receives a PRS sent by network side device *i*; terminal *a* performs a carrier phase measurement and a TOA measurement on the received PRS to obtain an initial downlink POA measurement quantity and an initial downlink TOA measurement quantity corresponding to moment $t_1$, where the initial downlink POA is POA1, $POA1 = \lambda \, \phi_a^i(t_1)$; and terminal *a* may determine the location of terminal *a* at moment $t_1$ based on the initial downlink POA measurement quantity and the initial downlink TOA measurement quantity.

In the non-PRS duration, i.e., in duration S2, terminal *a* may perform ATA at moment $t_m$ and record adjustment information about ATA, where the adjustment information about ATA at moment $t_m$ is assumed to be $\delta t_{ATA}(t_m)$.

At moment $t_2$ in duration S3, in reception of a first PRS sent by network side device *i,* terminal *a* may perform a carrier phase measurement and a TOA measurement on the received first PRS to obtain a first downlink POA and a downlink TOA corresponding to moment $t_2$, where the first downlink POA is assumed to be $\lambda \, \phi_a^{\prime i}(t_3)$.

Terminal *a* may correct, based on the adjustment information $\delta t_{ATA}(t_m)$ about ATA, the first downlink POA corresponding to network side device *i* according to formula 10 and formula 2, and obtain a first downlink corrected POA corresponding to moment $t_2$;

$$\lambda \, \phi_a^i(t_2) = \lambda \, \phi_a^{\prime i}(t_2) - c * \delta t_{ATA}(t_m) \quad \text{(formula 10)}$$

Here, $\lambda \, \phi_a^i(t_2)$ is the first downlink corrected POA corresponding to moment $t_2$.

In the above manner, after determining the first downlink corrected POA corresponding to moment $t_2$, terminal *a* may determine a second downlink corrected POA corresponding to moment $t_3$ based on the first downlink corrected POA and the adjustment information $\delta t_{ATA}(t_m)$ about ATA using formula 11:

$$\lambda \, \phi_a^i(t_3) = \lambda \, \phi_a^i(t_2) + \left(d_a^i(t_3) - d_a^i(t_2)\right) + \left(\delta d_a^i(t_3) - \delta d_a^i(t_2)\right) \quad \text{(formula 11)}$$

Here, $\lambda \, \phi_a^i(t_3)$ is the second downlink corrected POA corresponding to moment $t_3$.

In an embodiment, in case that terminal *a* remains stationary for duration S3 and a frequency deviation of crystal oscillators of terminal *a* and network side device *i* remains constant, formula 11 can be simplified into formula 13 through formula 12:

$$\lambda \, \phi_a^i(t_3) = \lambda \, \phi_a^i(t_2) + \lambda \, \delta f_a^i(t_2) \sum_{n=0}^{m_1-1} \left(N + N_g^n\right)/N \quad \text{(formula 12)}$$

$$\lambda \, \phi_a^i(t_3) = \lambda \, \phi_a^i(t_2) + 1.0714 m_1 \lambda \, \delta f_a^i(t_2) \quad \text{(formula 13)}$$

Here, $\delta f_a^i(t_2)$ denotes a frequency deviation of the crystal oscillators of terminal *a* and network side device *i* at moment $t_2$ after normalization is performed using Sub-Carrier Spacing, SCS, which remains unchanged from moment $t_2$ to moment $t_3$; $m_1$ denotes a quantity of Orthogonal Frequency Division Multiplexing, OFDM, symbols that have elapsed from moment $t_2$ to moment $t_3$.

A fifth embodiment

Exemplarily, as shown in FIG. 5, at moment $t_1$ within duration S1, terminal *a* receives a PRS sent by network side device *i*; terminal *a* performs a carrier phase measurement and a TOA measurement on the received PRS to obtain an initial downlink POA measurement quantity and an initial downlink TOA measurement quantity corresponding to moment $t_1$, where the initial downlink POA is POA1, $POA1 = \lambda \phi_a^i(t_1)$; and terminal *a* may determine the location of terminal *a* at moment $t_1$ based on the initial downlink POA measurement quantity and the initial downlink TOA measurement quantity.

In the non-PRS duration, i.e., in duration S2, terminal *a* may perform AFA at moment $t_m$ and record adjustment information about AFA. Assuming that a frequency deviation of crystal oscillators after adjustment, i.e., at moment $t_m$ is $\delta f_a^i(t_m)$ and a frequency deviation of the crystal oscillators before adjustment is $\delta f_a^i(t_0)$, then the adjustment information $\delta t_{AFA}(t_m)$ about AFA may be determined using formula 3.

At moment $t_2$ in duration S3, in reception of a first PRS sent by network side device *i,* terminal *a* may perform a carrier phase measurement and a TOA measurement on the received first PRS to obtain a first downlink POA and a downlink TOA corresponding to moment $t_2$, where the first downlink POA is assumed to be $\lambda \phi_a'^i(t_2)$.

Terminal *a* may correct, based on the adjustment information $\delta t_{AFA}(t_m)$ about AFA, the first downlink POA corresponding to network side device *i* according to formulas 14, 15, 16 and 17, and obtain a first downlink corrected POA corresponding to network side device i;

$$\lambda \phi_a^i(t_2) = \lambda \phi_a'^i(t_2) - (t_2 - t_m) * \delta t_{AFA}(t_m) \quad \text{(formula 14)}$$

$$\delta d_a^i(t_2) = \delta d_a'^i(t_2) - (t_2 - t_m) * \delta t_{AFA}(t_m) \quad \text{(formula 15)}$$

$$\delta d_a^i(t_2) = \delta d_a^i(t_0) + 1.0714 * (t_3 - t_0) * \lambda \delta f_a^i(t_0) \quad \text{(formula 16)}$$

$$\delta d_a'^i(t_2) = \delta d_a^i(t_0) + 1.0714 * (t_m - t_0) * \lambda \delta f_a^i(t_0) + 1.0714 * (t_3 - t_m) * \delta f_a^i(t_m) \quad \text{(formula 17)}$$

Here, $\lambda \phi_a^i(t_2)$ is the first downlink corrected POA corresponding to moment $t_2$; $\delta d_a^i(t_2)$ denotes a difference value of timing deviation at moment $t_2$ between network side device *i* and terminal *a* not performing AFA adjustment; $\delta d_a'^i(t_2)$ denotes a difference value of timing deviation at moment $t_2$ between network side device *i* and terminal *a* after performing AFA adjustment.

In the above manner, after determining the first downlink corrected POA corresponding to moment $t_2$, terminal *a* may determine a second downlink corrected POA corresponding to moment $t_3$ based on the first downlink corrected POA and the adjustment information $\delta t_{ATA}(t_m)$ about ATA using formula 11 or formula 13.

A sixth embodiment

Exemplarily, as shown in FIG. 6, at moment $t_1$ within duration S1, terminal *a* receives a PRS sent by network side device *i;* terminal *a* performs a carrier phase measurement and a TOA measurement on the received PRS to obtain an initial downlink POA measurement quantity and an initial downlink TOA measurement quantity corresponding to moment $t_1$, where the initial downlink POA is POA1, $POA1 = \lambda \phi_a^i(t_1)$; and terminal *a* may determine the location of terminal *a* at moment $t_1$ based on the initial downlink POA measurement quantity and the initial downlink TOA measurement quantity.

In the non-PRS duration, i.e., in duration S2, terminal *a* may perform ATA and AFA at moment $t_m$ and record adjustment information about ATA and AFA, where it is assumed that the adjustment information about ATA at moment $t_m$ is $\delta t_{ATA}(t_m)$ and the adjustment information about AFA at moment $t_m$ is $\delta t_{AFA}(t_m)$.

At moment $t_2$ in duration S3, in reception of a first PRS sent by network side device *i,* terminal *a* may perform a carrier phase measurement and a TOA measurement on the received first PRS to obtain a first downlink POA and a downlink TOA corresponding to moment $t_2$, where the first downlink POA is assumed to be $\lambda \phi_a'^i(t_2)$.

Terminal *a* may correct, based on the adjustment information $\delta t_{ATA}(t_m)$ about ATA and the adjustment information $\delta t_{AFA}(t_m)$ about AFA, the first downlink POA corresponding to network side device i according to formula 18 and formula 19, and obtain a first downlink corrected POA corresponding to network side device i;

$$\lambda \ \phi_a^i(t_2) = \lambda \ \phi_a'^i(t_2) - c* \ \delta \ t_{ATA}(t_m) - (t_2 - t_m) * \ \delta \ t_{AFA}(t_m) \quad \text{(formula 18)}$$

$$\delta \ d_a^i(t_2) = \ \delta \ d_a'^i(t_2) - c* \ \delta \ t_{ATA}(t_m) - (t_2 - t_m) * \ \delta \ t_{AFA}(t_m) \quad \text{(formula 19)}$$

In the above manner, after determining the first downlink corrected POA corresponding to moment $t_2$, terminal $a$ may determine a second downlink corrected POA corresponding to moment $t_3$ based on the first downlink corrected POA and the adjustment information $\delta \ t_{ATA}(t_m)$ about ATA using formula 11 or formula 13.

In any of the above ways, terminal $a$ may separately determine the second downlink corrected POA corresponding to each network side device, then terminal $a$ may determine the location of terminal $a$ based on the second downlink corrected POA and the downlink TOA corresponding to the each network side device.

In an embodiment, terminal $a$ may determine, based on the second downlink corrected POA and the downlink TOA corresponding to each network side device, the location of terminal $a$ at moment $t_3$ by performing united computation of ambiguity of whole cycles and location of terminal using the EKF algorithm and the MLAMDA algorithm, and report a determined location of terminal $a$ to LMF.

In another embodiment, terminal $a$ may determine a Reference Signal Time Difference, RSTD, between downlink TOAs of every two network side devices based on downlink TOAs corresponding to respective network side devices, and report the second downlink corrected POA corresponding to each network side device and at least one RSTD to the LMF. The LMF, in reception of the second downlink corrected POA corresponding to each network side device and the at least one RSTD reported by terminal $a$, may determine, based on the second downlink corrected POA corresponding to each network side device and the at least one RSTD, the location of terminal $a$ at moment $t_3$ by performing united computation of ambiguity of whole cycles and location of terminal using the EKF algorithm and the MLAMDA algorithm.

In another embodiment, terminal $a$ may determine, based on downlink TOAs corresponding to respective network side devices, an RSTD between downlink TOAs of every two network side devices; determine, based on second downlink corrected POAs corresponding to respective network side devices, a PDOA between second downlink corrected POAs of every two network side devices; and report multiple determined PDOAs and at least one determined RSTD to the LMF. The LMF, in reception of the multiple PDOAs and the at least one RSTD reported by terminal $a$, may determine, based on the multiple PDOAs and the at least one RSTD, the location of terminal $a$ at moment $t_3$ by performing united computation of ambiguity of whole cycles and UE location using the EKF algorithm and the MLAMDA algorithm.

With the above ways, terminal $a$ may utilize the adjustment information about ATA and/or AFA to correct the first downlink POA corresponding to network side device i. The influence of ATA and AFA performed by terminal $a$ on carrier phase positioning may be eliminated, and the accuracy of carrier phase positioning may thus be improved.

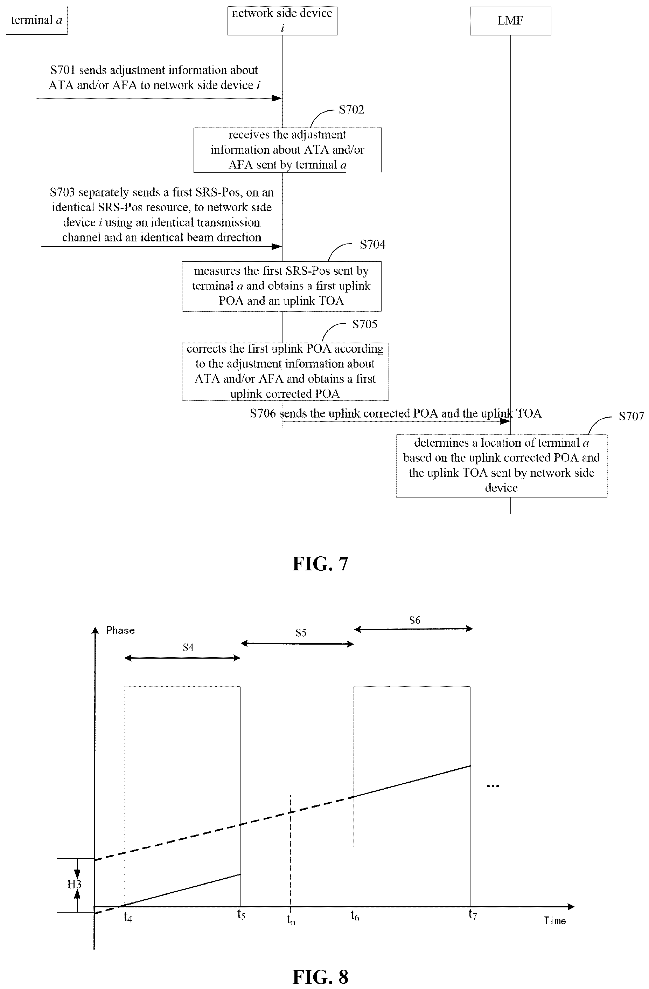

FIG. 7 illustrates an interaction flowchart of an uplink carrier phase positioning method according to an embodiment of the present disclosure, and FIG. 7 is exemplarily illustrated based on network side device $i$ and terminal $a$. Network side device $i$ may be an arbitrary network side device, and terminal $a$ refers to an arbitrary terminal. As shown in FIG. 7, the method includes the following steps S701 to S707.

In step S701, terminal $a$ sends adjustment information about ATA and/or AFA to network side device $i$.

In an optional embodiment, before terminal $a$ sends the adjustment information about ATA and/or AFA to network side device $i$, terminal $a$ may also proactively send a report that terminal $a$ has a capability to support carrier phase positioning to an LMF. The LMF, upon receiving the report, may send an indication message to terminal $a$. The indication message is used to instruct terminal $a$ to send the adjustment information about ATA and/or AFA to respective network side devices including network side device i or the LMF. Terminal $a$, upon receiving the indication message, may send the adjustment information about ATA and/or AFA to respective network side devices or the LMF.

In another optional embodiment, before terminal $a$ sends the adjustment information about ATA and/or AFA to a network side device, an LMF may send a terminal capability acquisition request to terminal $a$; terminal $a$, upon receiving the terminal capability acquisition request, may send a report to the LMF that terminal $a$ has a capability to support carrier phase positioning; and the LMF, upon receiving the report, may send an indication message to terminal $a$. The indication message is used to instruct terminal $a$ to send the adjustment information about ATA and/or AFA to respective network side devices including network side device $i$ or the LMF. Terminal $a$, upon receiving the indication message, may send the adjustment information about ATA and/or AFA to the network side device or the LMF.

In an optional embodiment, the LMF, upon receiving the adjustment information about ATA and/or AFA sent by terminal $a$, may send the adjustment information about ATA and/or AFA to each network side device serving terminal $a$, or may send the adjustment information about ATA and/or AFA to each network side device, a distance from which to terminal $a$ is less than a set distance threshold, where the set distance threshold may be 100 meters or 50 meters, which is not limited in the present disclosure.

In an optional embodiment, when terminal $a$ sends the adjustment information about ATA and/or AFA to network side device $i$, the terminal $a$ may send a part of or all of the following information: an adjustment amount of ATA; an adjustment amount of AFA; a rate of change of timing deviation of a crystal oscillator of the terminal and a rate of change of frequency deviation of the crystal oscillator of the terminal; a timestamp at which ATA becomes effective, i.e., a moment at which terminal *a* performs ATA; and a timestamp at which AFA becomes effective, i.e., a moment at which terminal *a* performs AFA.

In embodiments of the present disclosure, terminal *a* may send the adjustment information about ATA and/or AFA to the network side device or the LMF after performing ATA and/or AFA; or a first terminal may predict adjustment information about ATA and/or AFA before performing ATA and/or AFA, and the first terminal sends the predicted adjustment information about ATA and/or AFA to the network side device or the LMF.

In step S702, network side device i receives the adjustment information about ATA and/or AFA sent by terminal *a.*

In an optional embodiment, the adjustment information about ATA and/or AFA received by network side device *i* may be sent directly by terminal *a*, or may be sent from terminal *a* to the LMF and then forwarded by the LMF.

In step S703, terminal *a* separately sends a first SRS-Pos, on an identical SRS-Pos resource, to network side device *i* using an identical transmission channel and an identical beam direction.

Terminal *a* may separately send, using the identical transmission channel and the identical beam direction, an SRS-Pos on the identical SRS-Pos resource to network side device *i* at a first moment within an SRS-Pos duration, where the SRS-Pos corresponding to the first moment is the first SRS-Pos.

In step S704, network side device *i* measures the first SRS-Pos sent by terminal *a* and obtains a first uplink POA and an uplink TOA.

In step S705, network side device i corrects the first uplink POA according to the adjustment information about ATA and/or AFA and obtains a first uplink corrected POA.

In step S706, network side device *i* sends the uplink corrected POA and the uplink TOA to the LMF.

In step S707, the LMF receives the uplink corrected POA and the uplink TOA sent by network side device *i,* and determines a location of terminal *a* based on the uplink corrected POA and the uplink TOA.

In an optional embodiment, after obtaining the first uplink corrected POA by step S705, network side device *i* may send the first uplink corrected POA and the uplink TOA to the LMF, and the LMF, upon receiving the first uplink corrected POA and the uplink TOA, may determine a location of the first terminal based on the first uplink corrected POA and the uplink TOA.

The foregoing are to be described in detail below by way of several specific embodiments.

A seventh embodiment

Exemplarily, as shown in FIG. 8, assuming the first terminal is terminal *a*, terminal *a* sends an SRS-Pos, on an identical PRS resource, to network side device *i* at different moments within duration S4 using an identical uplink transmission channel and an identical beam direction. Network side device *i,* in reception of the SRS-Pos sent by terminal *a*, may perform a carrier phase measurement and a TOA measurement on the received SRS-Pos to obtain an initial uplink POA measurement quantity and an initial uplink TOA measurement quantity corresponding to moment $t_5$, and the network side device may send the initial uplink POA measurement quantity and the initial uplink TOA measurement quantity to the LMF to cause the LMF to determine a location of terminal *a* at moment $t_5$ based on the initial uplink POA and the initial uplink TOA.

In a non-SRS-Pos duration, i.e., in duration S5, terminal *a* may perform ATA at moment $t_n$, where ATA may cause an intercept of a phase-time curve to change; as shown in FIG. 8, an amount of change in the intercept is H3, and terminal *a* may record adjustment information about ATA, where the adjustment information about ATA at moment $t_n$ is assumed to be $\delta t_{ATA}(t_n)$. Terminal *a* may send the recorded adjustment information about ATA at moment $t_n$ to network side device *i,* and send an SRS-Pos to network side device *i* at moment $t_7$ within duration S6.

In reception of a first SRS-Pos sent by terminal *a*, network side device *i* may perform a carrier phase measurement and a TOA measurement on the received first SRS-Pos to obtain a first uplink POA and an uplink TOA corresponding to moment $t_7$, where the first uplink POA is assumed to be $\lambda \phi''^i_a(t_7)$. Network side device i may correct, base on the adjustment information $\delta t_{ATA}(t_n)$ about ATA, the first uplink POA corresponding to network side device *i* according to formula 20 and formula 21, and obtain a first uplink corrected POA corresponding to moment $t_7$:

$$\lambda \phi^i_a(t_7) = \lambda \phi'^i_a(t_7) - c * \delta t_{ATA}(t_n) \quad (\text{formula } 20)$$

$$\delta d^i_a(t_n) = \delta d^i_a(t_4) + c * \delta t_{ATA}(t_n) \quad (\text{formula } 21)$$

Here, $\lambda \phi^i_a(t_7)$ is the the first uplink corrected POA corresponding to moment $t_7$, $\delta t_{ATA}(t_n)$ is in units of seconds; $\delta d^i_a(t_n)$ denotes a difference value of timing deviation between network side device *i* and terminal *a* at

moment $t_n$; $\delta\, d_a^i(t_4)$ denotes a difference value of timing deviation between network side device $i$ and terminal $a$ at moment $t_4$.

After network side device $i$ determines the first uplink corrected POA, network side device i may send the first uplink corrected POA and the uplink TOA to the LMF.

An eighth embodiment

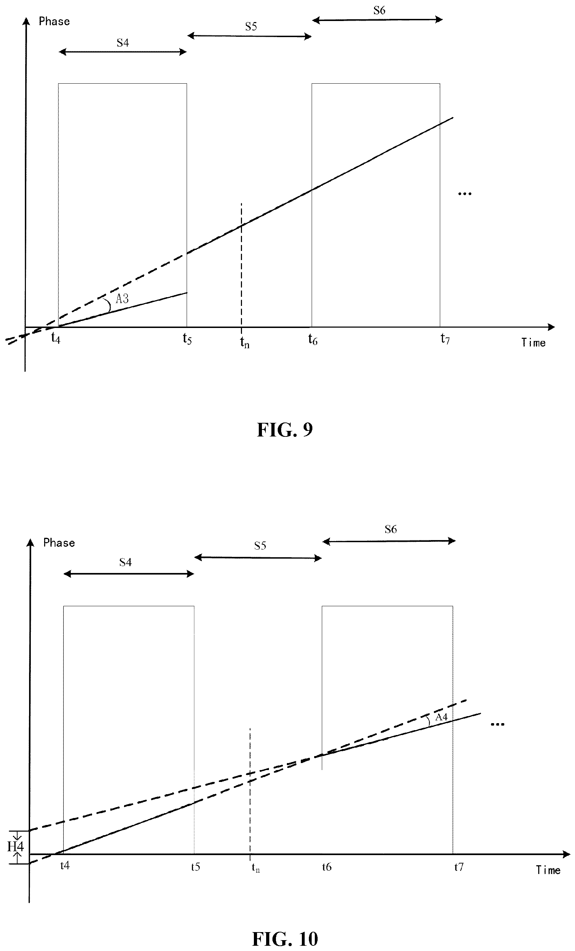

Exemplarily, as shown in FIG. 9, assuming the first terminal is terminal $a$, terminal $a$ sends an SRS-Pos, on an identical PRS resource, to network side device $i$ at different moments within duration S4 using an identical uplink transmission channel and an identical beam direction. Here, network side device $i$ may refer to any one network side device in respective network side devices. Network side device $i$, in reception of the SRS-Pos sent by terminal $a$, may perform a carrier phase measurement and a TOA measurement on the received SRS-Pos to obtain an initial uplink POA measurement quantity and an initial uplink TOA measurement quantity corresponding to moment $t_5$, and the network side device may send the initial uplink POA measurement quantity and the initial uplink TOA measurement quantity to the LMF to cause the LMF to determine a location of terminal $a$ at moment $t_5$ based on the initial uplink POA and the initial uplink TOA.

In a non-SRS-Pos duration, i.e., in duration S5, terminal $a$ may perform AFA at moment $t_n$, where AFA may cause a slope of a phase-time curve to change; as shown in FIG. 5, an amount of change in the slope is a slope indicated by $\angle$A3. Terminal $a$ may record adjustment information about AFA at moment $t_n$. Assuming that a frequency deviation of crystal oscillators after adjustment, i.e., at moment $t_n$ is $\delta\, f_a^i(t_n)$ and a frequency deviation of the crystal oscillators before adjustment is $\delta\, f_a^i(t_4)$, then the adjustment information about AFA may be expressed by formula 22:

$$\delta\, t_{AFA}(t_n) = \delta\, f_a^i(t_n) - \delta\, f_a^i(t_4) \quad \text{(formula 22)}$$

Here, $\delta\, t_{AFA}(t_n)$ denotes the adjustment information about AFA.

Terminal $a$ may send the recorded adjustment information about AFA at moment $t_n$ to network side device $i$, and send an SRS-Pos to network side device $i$ at moment $t_7$ within duration S6.

In reception of a first SRS-Pos sent by terminal $a$, network side device $i$ may perform a carrier phase measurement and a TOA measurement on the received first SRS-Pos to obtain a first uplink POA and an uplink TOA corresponding to moment $t_7$, where the first uplink POA is assumed to be $\lambda\, \phi_a'^i(t_7)$. Network side device $i$ may correct, based on the adjustment information $\delta\, t_{AFA}(t_n)$ about AFA, the first uplink POA corresponding to network side device $i$ according to formulas 23, 24, 25 and 26, and obtain a first uplink corrected POA corresponding to moment $t_7$:

$$\lambda\, \phi_a^i(t_7) = \lambda\, \phi_a'^i(t_7) - (t_7 - t_n) * \delta\, t_{AFA}(t_n) \quad \text{(formula 23)}$$

$$\delta\, d_a^i(t_7) = \delta\, d_a'^i(t_7) - (t_7 - t_n) * \delta\, t_{AFA}(t_n) \quad \text{(formula 24)}$$

$$\delta\, d_a^i(t_7) = \delta\, d_a^i(t_4) + 1.0714 * (t_7 - t_4) * \lambda\, \delta\, f_a^i(t_4) \quad \text{(formula 25)}$$

$$\delta\, d_a'^i(t_7) = \delta\, d_a^i(t_4) + 1.0714 * (t_n - t_4) * \lambda\, \delta\, f_a^i(t_4) + 1.0714 * (t_7 - t_n) * \delta\, f_a^i(t_n) \quad \text{(formula 26)}$$

Here, $\lambda\, \phi_a^i(t_7)$ is the first uplink corrected POA corresponding to moment $t_7$; $\delta\, d_a^i(t_7)$ denotes a difference value of timing deviation at moment $t_7$ between network side device $i$ and terminal $a$ not performing AFA adjustment; $\delta\, d_a'^i(t_7)$ denotes a difference value of timing deviation at moment $t_3$ between network side device $i$ and terminal $a$ after performing AFA adjustment; $\delta\, d_a^i(t_4)$ denotes a difference value of timing deviation between network side device $i$ and terminal $a$ at moment $t_4$.

After network side device $i$ determines the first uplink corrected POA, network side device i may send the first uplink corrected POA and the uplink TOA to the LMF.

A ninth embodiment

Exemplarily, as shown in FIG. 10, assuming the first terminal is terminal *a*, terminal *a* sends an SRS-Pos, on an identical PRS resource, to network side device *i* at different moments within duration S4 using an identical uplink transmission channel and an identical beam direction. Here, network side device *i* may refer to any one network side device in respective network side devices. Network side device i, in reception of the SRS-Pos sent by terminal *a*, may perform a carrier phase measurement and a TOA measurement on the received SRS-Pos to obtain an initial uplink POA measurement quantity and an initial uplink TOA measurement quantity corresponding to moment $t_5$, and the network side device may send the initial uplink POA measurement quantity and the initial uplink TOA measurement quantity to the LMF to cause the LMF to determine a location of terminal *a* at moment $t_5$ based on the initial uplink POA and the initial uplink TOA.

In a non-SRS-Pos duration, i.e., in duration S5, terminal *a* may perform ATA and AFA at moment $t_n$ so that both a slope and an intercept of a phase-time curve change; as shown in FIG. 10, an amount of change in the slope is a slope indicated by $\angle$A2, and an amount of change in the intercept is H2. Terminal *a* may record adjustment information about ATA and adjustment information about AFA at moment $t_n$, where the adjustment information about ATA at moment $t_n$ is assumed to be $\delta t_{ATA}(t_n)$ and the adjustment information about AFA at moment $t_n$ is assumed to be $\delta t_{AFA}(t_n)$.

Terminal *a* may send the recorded adjustment information about ATA at moment $t_n$ and the recorded adjustment information about AFA at moment $t_n$ to network side device *i*, and send a first SRS-Pos, on the identical PRS resource, to network side device *i* at moment $t_7$ within duration S6 using the identical uplink transmission channel and the identical beam direction.

Network side device *i* may perform a carrier phase measurement and a TOA measurement on the received first SRS-Pos to obtain a first uplink POA and an uplink TOA corresponding to moment $t_7$, where the first uplink POA is assumed to be $\lambda \phi'^i_a(t_7)$. Network side device *i* may correct, based on the adjustment information $\delta t_{ATA}(t_n)$ about ATA and the adjustment information $\delta t_{AFA}(t_n)$ about AFA, the first uplink POA corresponding to network side device *i* according to formula 27 and formula 28, and obtain a first uplink corrected POA corresponding to moment $t_7$:

$$\lambda \phi^i_a(t_7) = \lambda \phi'^i_a(t_7) - c* \delta t_{ATA}(t_n) - (t_7 - t_n) * \delta t_{AFA}(t_n) \quad \text{(formula 27)}$$

$$\delta d^i_a(t_7) = \delta d'^i_a(t_7) - c* \delta t_{ATA}(t_n) - (t_7 - t_n) * \delta t_{AFA}(t_n) \quad \text{(formula 28)}$$

After network side device *i* determines the first uplink corrected POA, network side device *i* may send the first uplink corrected POA and the uplink TOA to the LMF.

In any of the above ways, the LMF may receive the first uplink corrected POA and the uplink TOA sent by each network side device, and may determine, based on the uplink corrected POA and the uplink TOA sent by each network side device and a differential correction quantity of timing deviation between every two network side devices, a location of terminal *a* at moment $t_7$ by performing united computation of ambiguity of whole cycles and location of terminal using the EKF algorithm and the MLAMDA algorithm.

In another optional embodiment, the network side device may determine a second uplink corrected POA corresponding to the first terminal based on the adjustment information about ATA and/or AFA and the first uplink corrected POA, and send the second uplink corrected POA and the uplink TOA to the LMF to enable the LMF to determine a location of the first terminal based on the second uplink corrected POA and the uplink TOA, where the second uplink corrected POA represents a corrected value of a second uplink POA corresponding to the first terminal within an SRS-Pos duration.

The above may be illustrated specifically with the following embodiments.

A tenth embodiment

Exemplarily, as shown in FIG. 8, assuming the first terminal is terminal *a*, terminal *a* sends an SRS-Pos, on an identical PRS resource, to network side device *i* at different moments within duration S4 using an identical uplink transmission channel and an identical beam direction. Here, network side device *i* may refer to any one network side device in respective network side devices. Network side device *i*, in reception of the SRS-Pos sent by terminal *a*, may perform a carrier phase measurement and a TOA measurement on the received SRS-Pos to obtain an initial uplink POA measurement quantity and an initial uplink TOA measurement quantity corresponding to moment $t_5$, and the network side device may send the initial uplink POA measurement quantity and the initial uplink TOA measurement quantity to the LMF to cause the LMF to determine a location of terminal *a* at moment $t_5$ based on the initial uplink POA and the initial uplink TOA.

In a non-SRS-Pos duration, i.e., in duration S5, terminal $a$ may perform ATA at moment $t_n$ and may record adjustment information about ATA, where the adjustment information about ATA at moment $t_n$ is assumed to be $\delta t_{ATA}(t_n)$. Terminal $a$ may send the recorded adjustment information about ATA at moment $t_n$ to network side device $i$, and send a first SRS-Pos to network side device $i$ at moment $t_6$ within duration S6.

In reception of the first SRS-Pos sent by terminal $a$, network side device $i$ may perform a carrier phase measurement and a TOA measurement on the received first SRS-Pos to obtain a first uplink POA and an uplink TOA corresponding to moment $t_6$, where the first uplink POA is assumed to be $\lambda \phi''^{i}_{a}(t_6)$. Network side device $i$ may correct, base on the adjustment information $\delta t_{ATA}(t_n)$ about ATA, the first uplink POA corresponding to network side device $i$ according to formula 29 and formula 21, and obtain a first uplink corrected POA corresponding to moment $t_6$:

$$\lambda \phi^{i}_{a}(t_6) = \lambda \phi'^{i}_{a}(t_6) - c * \delta t_{ATA}(t_n) \quad (\text{formula } 29)$$

Here, $\lambda \phi^{i}_{a}(t_6)$ is the first uplink corrected POA corresponding to moment $t_6$.

In the above manner, after determining the first uplink corrected POA corresponding to moment $t_6$, network side device $i$ may determine a second uplink corrected POA corresponding to moment $t_7$ based on the first uplink corrected POA and the adjustment information $\delta t_{ATA}(t_n)$ about ATA using formula 30:

$$\lambda \phi^{i}_{a}(t_7) = \lambda \phi^{i}_{a}(t_6) + \left(d^{i}_{a}(t_7) - d^{i}_{a}(t_6)\right) + \left(\delta d^{i}_{a}(t_7) - \delta d^{i}_{a}(t_6)\right) \quad (\text{formula } 30)$$

Here, $\lambda \phi^{i}_{a}(t_7)$ is the the second uplink corrected POA corresponding to moment $t_7$.

In an embodiment, in case that terminal $a$ remains stationary for duration S6 and a frequency deviation of crystal oscillators of terminal $a$ and network side device $i$ remains constant, formula 30 can be simplified into formula 32 through formula 31:

$$\lambda \phi^{i}_{a}(t_7) = \lambda \phi^{i}_{a}(t_6) + \lambda \delta f^{i}_{a}(t_6) \sum_{n=0}^{m_1-1} \left(N + N^{n}_{g}\right)/N \quad (\text{formula } 31)$$

$$\lambda \phi^{i}_{a}(t_7) = \lambda \phi^{i}_{a}(t_6) + 1.0714 m_2 \lambda \delta f^{i}_{a}(t_6) \quad (\text{formula } 32)$$

Here, $\delta f^{i}_{a}(t_6)$ denotes a frequency deviation of the crystal oscillators of terminal $a$ and network side device $i$ at moment $t_6$ after normalization is performed using Sub-Carrier Spacing, SCS, which remains unchanged from moment $t_6$ to moment $t_7$; $m_2$ denotes a quantity of OFDM symbols that have elapsed from moment $t_6$ to moment $t_7$.

After determining the second uplink corrected POA and the uplink TOA, network side device $i$ may send the second uplink corrected POA and the uplink TOA to the LMF.

An eleventh embodiment

Exemplarily, as shown in FIG. 9, assuming the first terminal is terminal $a$, terminal $a$ sends an SRS-Pos, on an identical PRS resource, to network side device $i$ at different moments within duration S4 using an identical uplink transmission channel and an identical beam direction. Here, network side device $i$ may refer to any one network side device in respective network side devices. Network side device $i$, in reception of the SRS-Pos sent by terminal $a$, may perform a carrier phase measurement and a TOA measurement on the received SRS-Pos to obtain an initial uplink POA measurement quantity and an initial uplink TOA measurement quantity corresponding to moment $t_5$, and the network side device may send the initial uplink POA measurement quantity and the initial uplink TOA measurement quantity to the LMF to cause the LMF to determine a location of terminal $a$ at moment $t_5$ based on the initial uplink POA and the initial uplink TOA.

In a non-SRS-Pos duration, i.e., in duration S5, terminal $a$ may perform AFA at moment $t_n$ and may record adjustment information about AFA at moment $t_n$. Assuming that a frequency deviation of crystal oscillators after adjustment, i.e., at moment $t_n$ is $\delta f^{i}_{a}(t_n)$ and a frequency deviation of the crystal oscillators before adjustment is $\delta f^{i}_{a}(t_4)$, then the adjustment information about AFA may be expressed by formula 22.

Terminal *a* may send the recorded adjustment information about AFA at moment $t_n$ to network side device *i,* and send an SRS-Pos to network side device *i* at moment $t_6$ within duration S6.

In reception of a first SRS-Pos sent by terminal *a*, network side device *i* may perform a carrier phase measurement and a TOA measurement on the received first SRS-Pos to obtain a first uplink POA and an uplink TOA corresponding to moment $t_6$, where the first uplink POA is assumed to be $\lambda \phi'^i_a(t_7)$. Network side device *i* may correct, based on the adjustment information $\delta t_{AFA}(t_n)$ about AFA, the first uplink POA corresponding to network side device *i* according to formulas 33, 34, 35 and 36, and obtain a first uplink corrected POA corresponding to moment $t_6$:

$$\lambda \phi^i_a(t_6) = \lambda \phi'^i_a(t_6) - (t_6 - t_n) * \delta t_{AFA}(t_n) \quad (\text{formula } 33)$$

$$\delta d^i_a(t_6) = \delta d'^i_a(t_6) - (t_6 - t_n) * \delta t_{AFA}(t_n) \quad (\text{formula } 34)$$

$$\delta d^i_a(t_6) = \delta d^i_a(t_4) + 1.0714 * (t_6 - t_4) * \lambda \delta f^i_a(t_4) \quad (\text{formula } 35)$$

$$\delta d'^i_a(t_6) = \delta d^i_a(t_4) + 1.0714 * (t_n - t_4) * \lambda \delta f^i_a(t_4) + 1.0714 * (t_6 - t_n) * \delta f^i_a(t_n)$$
$$(\text{formula } 36)$$

Here, $\lambda \phi^i_a(t_6)$ is the first uplink corrected POA corresponding to moment $t_6$; $\delta d^i_a(t_6)$ denotes a difference value of timing deviation at moment $t_6$ between network side device *i* and terminal *a* not performing AFA adjustment; $\delta d'^i_a(t_6)$ denotes a difference value of timing deviation at moment $t_6$ between network side device *i* and terminal *a* after performing AFA adjustment.

In the above manner, after determining the first uplink corrected POA corresponding to moment $t_6$, network side device *i* may determine a second uplink corrected POA corresponding to moment $t_7$ based on the first uplink corrected POA and the adjustment information $\delta t_{ATA}(t_n)$ about ATA using formula 30.

After determining the second uplink corrected POA, network side device *i* may send the second uplink corrected POA and the uplink TOA to the LMF.

A twelfth embodiment

Exemplarily, as shown in FIG. 10, assuming the first terminal is terminal *a*, terminal *a* sends an SRS-Pos, on an identical PRS resource, to network side device *i* at different moments within duration S4 using an identical uplink transmission channel and an identical beam direction. Here, network side device *i* may refer to any one network side device in respective network side devices. Network side device *i*, in reception of the SRS-Pos sent by terminal *a*, may perform a carrier phase measurement and a TOA measurement on the received SRS-Pos to obtain an initial uplink POA measurement quantity and an initial uplink TOA measurement quantity corresponding to moment $t_5$, and the network side device may send the initial uplink POA measurement quantity and the initial uplink TOA measurement quantity to the LMF to cause the LMF to determine a location of terminal *a* at moment $t_5$ based on the initial uplink POA and the initial uplink TOA.

In a non-SRS-Pos duration, i.e., in duration S5, terminal *a* may perform ATA and AFA at moment $t_n$ and may record adjustment information about ATA and adjustment information about AFA at moment $t_n$, where the adjustment information about ATA at moment $t_n$ is assumed to be $\delta t_{ATA}(t_n)$ and the adjustment information about AFA at moment $t_n$ is assumed to be $\delta t_{AFA}(t_n)$.

Terminal *a* may send the recorded adjustment information about AFA at moment $t_n$ to the network side device, and may send a first SRS-Pos to the network side device at moment $t_6$ within duration S6.

Network side device *i* may perform a carrier phase measurement and a TOA measurement on the received first SRS-Pos to obtain a first uplink POA and an uplink TOA corresponding to moment $t_6$, where the first uplink POA is assumed to be $\lambda \phi'^i_a(t_6)$.

Network side device *i* may correct, based on the adjustment information $\delta t_{ATA}(t_n)$ about ATA and the adjustment information $\delta t_{AFA}(t_n)$ about AFA, the first uplink POA corresponding to network side device *i* according to formula 37 and formula 38, and obtain a first uplink corrected POA corresponding to network side device *i*:

$$\lambda \; \phi_a^i(t_6) = \lambda \; \phi_a^{'i}(t_6) - c* \; \delta \, t_{ATA}(t_n) - (t_6 - t_n) * \; \delta \, t_{AFA}(t_n) \quad \text{(formula 27)}$$

$$\delta \, d_a^i(t_6) = \delta \, d_a^{'i}(t_6) - c* \; \delta \, t_{ATA}(t_n) - (t_6 - t_n) * \; \delta \, t_{AFA}(t_n) \quad \text{(formula 28)}$$

In the above manner, after determining the first uplink corrected POA corresponding to moment $t_6$, network side device *i* may determine a second uplink corrected POA corresponding to moment $t_7$ based on the first uplink corrected POA and the the adjustment information $\delta \, t_{ATA}(t_n)$ about ATA using formula 30.

After determining the first uplink corrected POA, network side device i may send the first uplink corrected POA and the uplink TOA to the LMF.

In any of the above ways, the LMF may receive the first uplink corrected POA and the uplink TOA sent by each network side device, and may determine, based on the uplink corrected POA and the uplink TOA sent by each network side device and a differential correction quantity of timing deviation between every two network side devices, a location of terminal *a* at moment $t_7$ by performing united computation of ambiguity of whole cycles and location of terminal using the EKF algorithm and the MLAMDA algorithm.

In the above manner, each network side device, upon receiving the adjustment information about ATA and/or AFA sent by terminal *a*, may correct a measured uplink POA based on the adjustment information about ATA and/or AFA to obtain an uplink corrected POA for determining the location of terminal *a*. The influence of ATA and AFA performed by the terminal on carrier phase positioning may be eliminated, and accuracy of carrier phase positioning may then be improved.

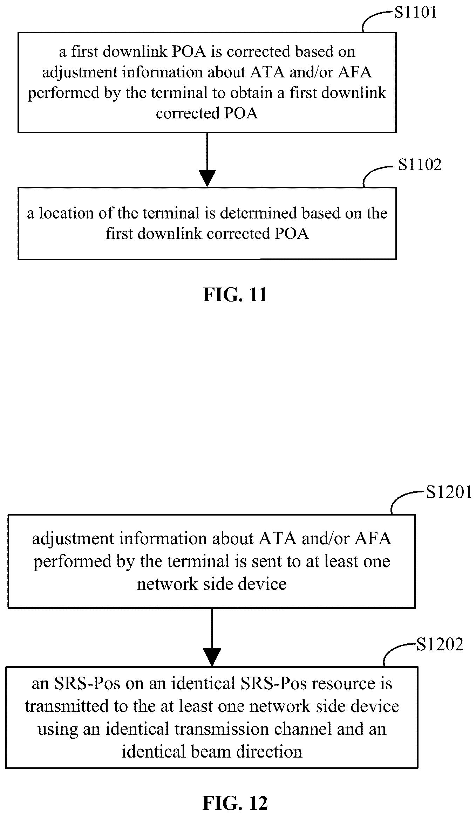

Based on the same inventive concept, a carrier phase positioning method is provided according to an embodiment of the present disclosure, the method is executed by a terminal. As shown in FIG. 11, which is a flowchart of the method, the method includes the following steps.

In step S1101, a first downlink POA is corrected based on adjustment information about ATA and/or AFA performed by the terminal to obtain a first downlink corrected POA.

Here, the first downlink POA is obtained by performing measurement on a first downlink PRS sent by at least one network side device.

In step S1102, a location of the terminal is determined based on the first downlink corrected POA.

Based on the same inventive concept, a carrier phase positioning method is provided according to an embodiment of the present disclosure, the method is executed by a network side device. The method includes the following step:

sending, at a respective moment, an PRS on an identical downlink PRS resource to a terminal using an identical downlink transmission channel and an identical beam direction; where the PRS is used to provide a downlink POA, and the downlink POA is used for determination of a location of the terminal after correction of the downlink POA based on adjustment information about ATA and/or AFA.

Based on the same inventive concept, a carrier phase positioning method is provided according to an embodiment of the present disclosure, the method is executed by a terminal. As shown in FIG. 12, which is a flowchart of the method, the method includes the following steps:

In step S1201, adjustment information about ATA and/or AFA performed by the terminal is sent to at least one network side device.

In step S1202, an SRS-Pos on an identical SRS-Pos resource is transmitted to the at least one network side device using an identical transmission channel and an identical beam direction.

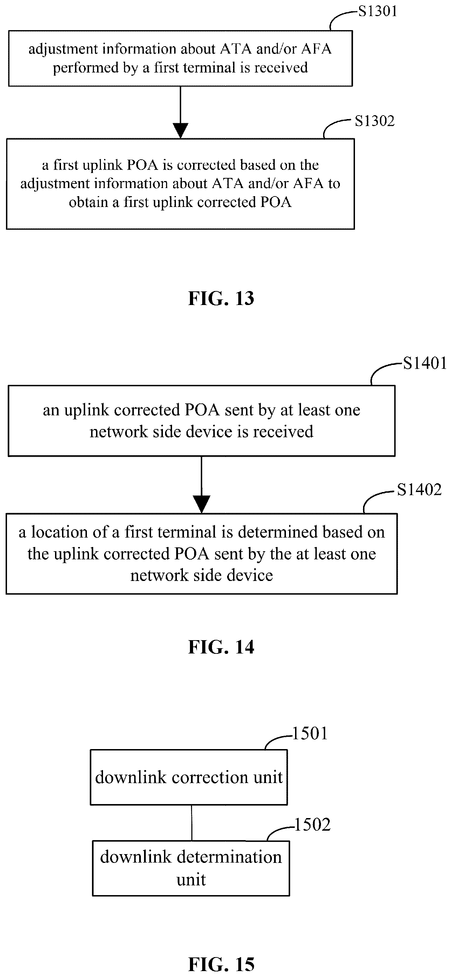

Based on the same inventive concept, a carrier phase positioning method is provided according to an embodiment of the present disclosure, the method is executed by a network side device. As shown in FIG. 13, which is a flowchart of the method, the method includes the following steps.

In step S1301, adjustment information about ATA and/or AFA performed by a first terminal is received.

In step S1302, a first uplink POA is corrected based on the adjustment information about ATA and/or AFA to obtain a first uplink corrected POA.

The first uplink corrected POA is used to assist in determining a location of the first terminal; the first uplink POA is obtained by measuring a first SRS-Pos sent by the first terminal.

Based on the same inventive concept, a carrier phase positioning method is provided according to an embodiment of the present disclosure, the method is executed by an LMF. As shown in FIG. 14, which is a flowchart of the method, the method includes the following steps.

In step S1401, an uplink corrected POA sent by at least one network side device is received.

The uplink corrected POA is obtained by correcting an uplink POA based on adjustment information about ATA and/or AFA; the uplink POA is obtained by performing measurement on an SRS-Pos.

In step S1402, a location of a first terminal is determined based on the uplink corrected POA sent by the at least one network side device.

Based on the same inventive concept, a terminal is provided according to an embodiment of the present disclosure. As shown in FIG. 15, the terminal includes a downlink correction unit 1501 and a downlink determination unit 1502.

The downlink correction unit 1501 corrects a first downlink POA based on adjustment information about ATA and/or AFA performed by the terminal to obtain a first downlink corrected POA; where the first downlink POA is obtained by by performing measurement on a first downlink PRS sent by at least one network side device.

The downlink determination unit 1502 determines a location of the terminal based on the first downlink corrected POA.

In an optional embodiment, prior to the downlink correction unit 1501, the terminal further includes a downlink measurement unit, and the downlink measurement unit is specifically used to:

perform ATA and/or AFA in a non-PRS duration;
receive a first PRS sent by the at least one network side device and measure the received first PRS, in a PRS duration.

In an optional embodiment, the downlink determination unit 1502 is specifically used to:

determine a second downlink corrected POA based on the adjustment information and the first downlink corrected POA;
determine a location of the terminal based on the second downlink corrected POA corresponding to the at least one network side device.

In an optional embodiment, the downlink determination unit 1502 is specifically used to:

determine an RSTD between downlink TOAs of every two network side devices based on the downlink TOA corresponding to the at least one network side device, and report the first downlink corrected POA corresponding to the at least one network side device and at least one RSTD to an LMF; or
determine, based on the first downlink corrected POA corresponding to the at least one network side device, a PDOA between the first downlink corrected POAs of every two network side devices; determine, based on a downlink TOA corresponding to the at least one network side device, an RSTD between the downlink TOAs of every two network side devices; and report obtained at least one PDOA and at least one RSTD to an LMF; where the downlink TOA corresponding to each network side device is obtained by measuring the first PRS sent by the each network side device.

In an optional embodiment, the network side device includes a base station and/or a transmission reception point TRP.

Based on the same inventive concept, a network side device is provided according to an embodiment of the present disclosure, including:

a downlink transmitting unit, which transmits, at a respective moment, an PRS on an identical downlink PRS resource to a terminal using an identical downlink transmission channel and an identical beam direction; where the PRS is used to provide a downlink POA, and the downlink POA is used for determination of a location of the terminal after correction of the downlink POA based on adjustment information about ATA and/or AFA.

In an optional embodiment, the network side device includes a base station and/or a transmission reception point TRP.

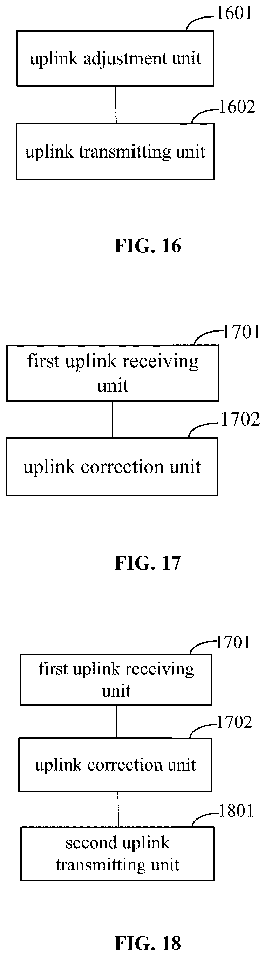

Based on the same inventive concept, a terminal is provided according to an embodiment of the present disclosure. As shown in FIG. 16, the terminal includes an uplink adjustment unit 1601 and an uplink transmitting unit 1602.

The uplink adjustment unit 1601 sends adjustment information about ATA and/or AFA performed by the terminal to at least one network side device.

The uplink transmitting unit 1602 transmits an SRS-Pos on an identical SRS-Pos resource to the at least one network side device using an identical transmission channel and an identical beam direction.

In an optional embodiment, the uplink adjustment unit 1601 is specifically used to:

send any one or more of the following information to the at least one network side device: an adjustment amount of ATA; an adjustment amount of AFA; a rate of change of timing deviation of a crystal oscillator of the terminal and a rate of change of frequency deviation of the crystal oscillator of the terminal; a timestamp at which ATA becomes effective, which refers to a moment at which the terminal performs ATA; and a timestamp at which AFA becomes effective, which refers to a moment at which the terminal performs AFA.

In an optional embodiment, the network side device includes a base station and/or a transmission reception point TRP.

Based on the same inventive concept, a network side device is provided according to an embodiment of the present disclosure. As shown in FIG. 17, the network side device includes a first uplink receiving unit 1701 and an uplink correction unit 1702.

The first uplink receiving unit 1701 receives adjustment information about ATA and/or AFA performed by a first terminal.

The uplink correction unit 1702 corrects a first uplink POA based on the adjustment information about ATA and/or AFA to obtain a first uplink corrected POA; where the first uplink corrected POA is used to assist in determining a location of the first terminal, and the first uplink POA is obtained by measuring a first uplink SRS-Pos sent by the first terminal.

In an optional embodiment, after the uplink correction unit 1703, the network side device further includes an uplink measurement unit, and the uplink measurement unit is used specifically to: receive a first SRS-Pos sent by the first terminal and measure the received first SRS-Pos, within an SRS-Pos duration.

In an optional embodiment, the first uplink receiving unit 1701 is specifically used to:

receive the adjustment information about ATA and/or AFA which is sent directly from the first terminal; or
receive the adjustment information about ATA and/or AFA which is forwarded by an LMF.

In an optional embodiment, after said uplink correction unit 1702, network side device a second uplink transmitting unit 1801, as shown in FIG. 18; the second uplink transmitting unit 1801 is specifically used to: transmit the first uplink corrected POA and an uplink TOA to the LMF, the uplink TOA being obtained by measuring a first SRS-Pos sent by the first terminal.

In an optional embodiment, the second uplink transmitting unit 1801 may further be used to: determine a second uplink corrected POA corresponding to the first terminal based on the adjustment information and the first uplink corrected POA, and send the second uplink corrected POA and the uplink TOA to the LMF.

In an optional embodiment, the network side device includes a base station and/or a transmission reception point TRP.

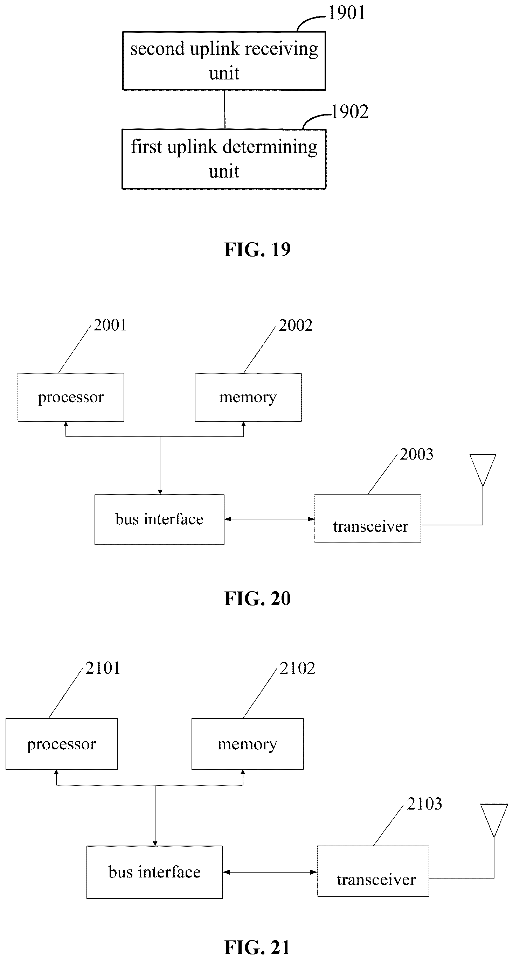

Based on the same inventive concept, an LMF is provided according to an embodiment of the present disclosure. As shown in FIG. 19, the LMF includes a second uplink receiving unit 1901 and a first uplink determining unit 1902.

The second uplink receiving unit 1901 receives an uplink corrected POA sent by at least one network side device. The uplink corrected POA is obtained by correcting an uplink POA based on adjustment information about ATA and/or AFA; the uplink POA is obtained by performing measurement on an uplink SRS-Pos.

The first uplink determination unit 1902 determines a location of the first terminal based on the uplink corrected POA sent by the at least one network side device.

In an optional embodiment, the first uplink determination unit 1902 is specifically used to:

determining the location of the first terminal based on the uplink corrected POA and an uplink TOA sent by the at least one network side device and a differential correction quantity of timing deviation between every two network side devices; where the differential correction quantity of timing deviation between every two network side devices is pre-stored by the LMF or reported by the network side devices, and the uplink TOA is obtained by performing measurement on an SRS-Pos.

In an optional embodiment, the LMF further includes a second interaction unit, the second interaction unit being specifically to:

receive the adjustment information about ATA and/or AFA sent by the first terminal;
receive the adjustment information about ATA and/or AFA sent by the first terminal;
send the adjustment information about ATA and/or AFA to at least one network side device serving the first terminal; or
send the adjustment information about ATA and/or AFA to at least one network side device, a distance from which to the first terminal is less than a set distance threshold.

Based on the same technical idea, a terminal is provided according to an embodiment of the present disclosure. The terminal is capable of performing any of the carrier phase positioning methods implemented in the above embodiments.

FIG. 20 illustrates a schematic diagram of the structure of the terminal provided by the embodiment of the present disclosure, i.e., it illustrates another schematic diagram of the structure of the terminal. As shown in FIG. 20, the terminal includes a processor 2001, a memory 2002, and a transceiver 2003.

The processor 2001 is responsible for managing a bus architecture and usual processing, and the memory 2002 may store data used by the processor 2001 in performing operations. The transceiver 2003 is used to receive and transmit data under control of the processor 2001.

The bus architecture may include any number of interconnected buses and bridges, which are specifically linked together by various circuits of one or more processors represented by processor 2001 and memory represented by memory 2002. The bus architecture may also link together various other circuits such as peripherals, voltage regulators, and power management circuits, all of which are well known in the art and, therefore, are not further described herein. The bus interface provides an interface. The processor 2001 is responsible for managing the bus architecture and usual processing, and the memory 2002 may store data used by the processor 2001 in performing operations.

The processes revealed by embodiments of the present disclosure may be applied in, or implemented by, the processor 2001. In implementation, steps of signal processing processes may be accomplished by integrated logic circuits in hardware in the processor 2001 or instructions in the form of software. The processor 2001 may be a general-purpose processor, a digital signal processor, a special-purpose integrated circuit, a field-programmable gate array or other programmable logic device, a discrete gate or transistor logic device, a discrete hardware component, that may implement or perform the various methods, steps, and logic block diagrams disclosed in the embodiments of the present disclosure. The general-purpose processor may be a microprocessor or any conventional processor, etc. The steps of the methods disclosed in conjunction with embodiments of the present disclosure may be embodied to be completed directly by a hardware processor, or to be performed by a combination of hardware and software modules in the processor. The software module may be located in a storage medium well known in the art, such as random memory, flash memory, read-only memory, programmable read-only memory or electrically erasable programmable memory, and register. The storage medium is located in memory 2002, and the processor 2001 reads information in memory 2002 and completes the steps of the signal processing processes in combination with the hardware of the processor 2001.

Specifically, the processor 2001 is used to read computer instructions in the memory 2002, and the processor 2001, when executing the computer instructions, performs:

> correcting a first downlink POA based on adjustment information about ATA and/or AFA performed by the terminal to obtain a first downlink corrected POA, where the first downlink POA is obtained by performing measurement on a first downlink PRS sent by at least one network side device;
> determining a location of the terminal based on the first downlink corrected POA.

In an optional embodiment, the processor 2001 is specifically used to:

> perform ATA and/or AFA in a non-PRS duration;
> receive a first PRS sent by the at least one network side device and measure the received first PRS, in a PRS duration.

In an optional embodiment, the processor 2001 is specifically used to: determine a second downlink corrected POA based on the adjustment information and the first downlink corrected POA; and determine the location of the terminal based on the second downlink corrected POA corresponding to the at least one network side device.

In an optional embodiment, the processor 2001 is specifically used to:

> determine an RSTD between downlink TOAs of every two network side devices based on the downlink TOA corresponding to the at least one network side device, and report the first downlink corrected POA corresponding to the at least one network side device and at least one RSTD to an LMF; or
> determine, based on the first downlink corrected POA corresponding to the at least one network side device, a PDOA between the first downlink corrected POAs of every two network side devices; determine, based on a downlink TOA corresponding to the at least one network side device, an RSTD between the downlink TOAs of every two network side devices; and report obtained at least one PDOA and at least one RSTD to an LMF; where the downlink TOA corresponding to each network side device is obtained by measuring the first PRS sent by the each network side device.

In an optional embodiment, the network side device includes a base station and/or a transmission reception point TRP.

Based on the same technical idea, a network side device is further provided according to an embodiment of the present disclosure. The network side device is capable of performing any of the carrier phase positioning methods implemented in the above embodiments.

FIG. 21 illustrates a schematic diagram of the structure of the network side device provided by the embodiment of the present disclosure, i.e., it illustrates another schematic diagram of the structure of the network side device. As shown in FIG. 21, the network side device includes a processor 2101, a memory 2102, and a transceiver 2103.

The processor 2101 is responsible for managing a bus architecture and usual processing, and the memory 2102 may store data used by the processor 2101 in performing operations. The transceiver 2103 is used to receive and transmit data under control of the processor 2101.

The bus architecture may include any number of interconnected buses and bridges, which are specifically linked together by various circuits of one or more processors represented by processor 2101 and memory represented by memory 2102. The bus architecture may also link together various other circuits such as peripherals, voltage regulators, and power management circuits, all of which are well known in the art and, therefore, are not further described herein. The bus interface provides an interface. The processor 2101 is responsible for managing the bus architecture and usual processing, and the memory 2102 may store data used by the processor 2101 in performing operations.

The processes revealed by embodiments of the present disclosure may be applied in, or implemented by, the processor 2101. In implementation, steps of signal processing processes may be accomplished by integrated logic circuits in hardware in the processor 2001 or instructions in the form of software. The processor 2101 may be a general-purpose processor, a digital signal processor, a special-purpose integrated circuit, a field-programmable gate array or other programmable logic device, a discrete gate or transistor logic device, a discrete hardware component, that may implement or perform the various methods, steps, and logic block diagrams disclosed in the embodiments of the present disclosure. The general-purpose processor may be a microprocessor or any conventional processor, etc. The steps of the methods disclosed in conjunction with embodiments of the present disclosure may be embodied to be completed directly by a hardware processor, or to be performed by a combination of hardware and software modules in the processor. The software module may be located in a storage medium well known in the art, such as random memory, flash memory, read-only memory, programmable read-only memory or electrically erasable programmable memory, and register. The storage medium is located in memory 2102, and the processor 2101 reads information in memory 2102 and completes the steps of the signal processing processes in combination with the hardware of the processor 2101.

Specifically, the processor 2101 is used to read computer instructions in the memory 2102, and the processor 2101, when executing the computer instructions, performs:

controlling the transceiver 2103 to transmit, at a respective moment, an PRS on an identical downlink PRS resource to a terminal using an identical downlink transmission channel and an identical beam direction; where the PRS is used to provide a downlink POA, and the downlink POA is used for determination of a location of the terminal after correction of the downlink POA based on adjustment information about ATA and/or AFA.

In an optional embodiment, the network side device includes a base station and/or a transmission reception point TRP.

Based on the same technical idea, a terminal is provided according to an embodiment of the present disclosure. The terminal is capable of performing any of the carrier phase positioning methods implemented in the above embodiments.

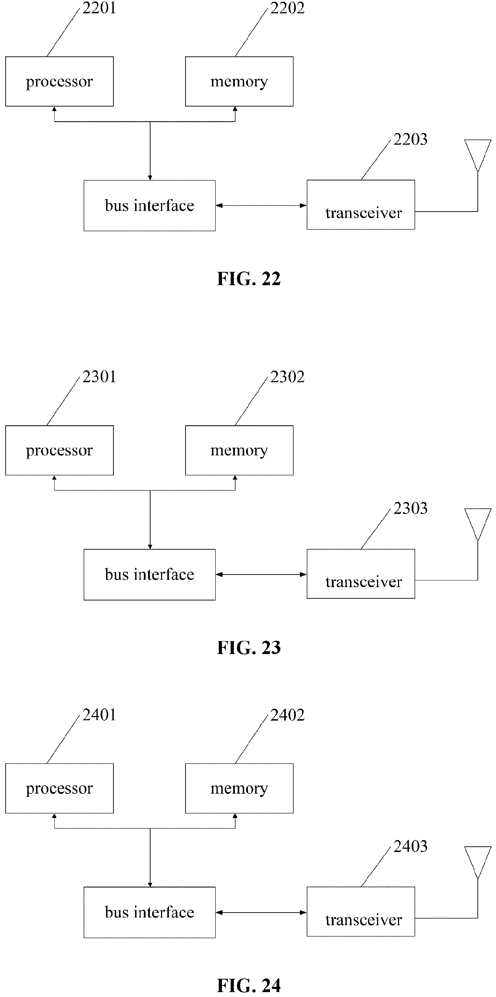

FIG. 22 illustrates a schematic diagram of the structure of the terminal provided by the embodiment of the present disclosure, i.e., it illustrates another schematic diagram of the structure of the terminal. As shown in FIG. 22, the terminal includes a processor 2201, a memory 2202, and a transceiver 2203.

The processor 2201 is responsible for managing a bus architecture and usual processing, and the memory 2202 may store data used by the processor 2001 in performing operations. The transceiver 2203 is used to receive and transmit data under control of the processor 2201.

The bus architecture may include any number of interconnected buses and bridges, which are specifically linked together by various circuits of one or more processors represented by processor 2201 and memory represented by memory 2202. The bus architecture may also link together various other circuits such as peripherals, voltage regulators, and power management circuits, all of which are well known in the art and, therefore, are not further described herein. The bus interface provides an interface. The processor 2201 is responsible for managing the bus architecture and usual processing, and the memory 2202 may store data used by the processor 2201 in performing operations.

The processes revealed by embodiments of the present disclosure may be applied in, or implemented by, the processor 2201. In implementation, steps of signal processing processes may be accomplished by integrated logic circuits in hardware in the processor 2001 or instructions in the form of software. The processor 2201 may be a general-purpose processor, a digital signal processor, a special-purpose integrated circuit, a field-programmable gate array or other programmable logic device, a discrete gate or transistor logic device, a discrete hardware component, that may implement or perform the various methods, steps, and logic block diagrams disclosed in the embodiments of the present disclosure. The general-purpose processor may be a microprocessor or any conventional processor, etc. The steps of the methods disclosed in conjunction with embodiments of the present disclosure may be embodied to be completed directly by a hardware processor, or to be performed by a combination of hardware and software modules in the processor. The software module may be located in a storage medium well known in the art, such as random memory, flash memory, read-only memory, programmable read-only memory or electrically erasable programmable memory, and register. The storage medium is located in memory 2202, and the processor 2201 reads information in memory 2202 and completes the steps of the signal processing processes in combination with the hardware of the processor 2201.

Specifically, the processor 2201 is used to read computer instructions in the memory 2202, and the processor 2201, when executing the computer instructions, performs:

controlling the transceiver 2203 to transmit adjustment information about ATA and/or AFA performed by the terminal to at least one network side device;
transmitting an SRS-Pos on an identical SRS-Pos resource to the at least one network side device using an identical transmission channel and an identical beam direction.

In an optional embodiment, the transceiver 2203 is specifically used to:
transmit any one or more of the following information to the at least one network side device: an adjustment amount of ATA; an adjustment amount of AFA; a rate of change of timing deviation of a crystal oscillator of the terminal and a rate of change of frequency deviation of the crystal oscillator of the terminal; a timestamp at which ATA becomes effective, which refers to a moment at which the terminal performs ATA; and a timestamp at which AFA becomes effective, which refers to a moment at which the terminal performs AFA.

Based on the same technical idea, a network side device is further provided according to an embodiment of the present disclosure. The network side device is capable of performing any of the carrier phase positioning methods implemented in the above embodiments.

FIG. 23 illustrates a schematic diagram of the structure of the network side device provided by the embodiment of the present disclosure, i.e., it illustrates another schematic diagram of the structure of the network side device. As shown in FIG. 23, the network side device includes a processor 2301, a memory 2302, and a transceiver 2303.

The processor 2301 is responsible for managing a bus architecture and usual processing, and the memory 2302 may store data used by the processor 2301 in performing operations. The transceiver 2303 is used to receive and transmit data under control of the processor 2301.

The bus architecture may include any number of interconnected buses and bridges, which are specifically linked together by various circuits of one or more processors represented by processor 2301 and memory represented by memory 2102. The bus architecture may also link together various other circuits such as peripherals, voltage regulators, and power management circuits, all of which are well known in the art and, therefore, are not further described herein. The bus interface provides an interface. The processor 2301 is responsible for managing the bus architecture and usual processing, and the memory 2302 may store data used by the processor 2301 in performing operations.

The processes revealed by embodiments of the present disclosure may be applied in, or implemented by, the processor 2301. In implementation, steps of signal processing processes may be accomplished by integrated logic circuits in hardware in the processor 2001 or instructions in the form of software. The processor 2301 may be a general-purpose processor, a digital signal processor, a special-purpose integrated circuit, a field-programmable gate array or other programmable logic device, a discrete gate or transistor logic device, a discrete hardware component, that may implement or perform the various methods, steps, and logic block diagrams disclosed in the embodiments of the present disclosure. The general-purpose processor may be a microprocessor or any conventional processor, etc. The steps of the methods disclosed in conjunction with embodiments of the present disclosure may be embodied to be completed directly by a hardware processor, or to be performed by a combination of hardware and software modules in the processor. The software module may be located in a storage medium well known in the art, such as random memory, flash memory, read-only memory, programmable read-only memory or electrically erasable programmable memory, and register. The storage medium is located in memory 2302, and the processor 2301 reads information in memory 2302 and completes the steps of the signal processing processes in combination with the hardware of the processor 2301.

Specifically, the processor 2301 is used to read computer instructions in the memory 2302, and the processor 2301, when executing the computer instructions, performs:

controlling the transceiver 2303 to receive adjustment information about ATA and/or AFA performed by a first terminal; correcting a first uplink POA based on the adjustment information about ATA and/or AFA to obtain a first uplink corrected POA; where the first uplink corrected POA is used to assist in determining a location of the first terminal, and the first uplink POA is obtained by measuring a first uplink SRS-Pos sent by the first terminal.

In an optional embodiment, the processor 2301 is specifically used to:
control the transceiver to receive a first SRS-Pos sent by the first terminal within an SRS-Pos duration, and measure the received first SRS-Pos.

In an optional embodiment, the transceiver 2303 is specifically used to:

receive the adjustment information about ATA and/or AFA which is sent directly from the first terminal; or
receive the adjustment information about ATA and/or AFA which is forwarded by an LMF.

In an optional embodiment, the transceiver 2303 is specifically used to:
transmit the first uplink corrected POA and an uplink TOA to the LMF, the uplink TOA being obtained by measuring a first SRS-Pos sent by the first terminal.

In an optional embodiment, the processor 2301 is specifically used to:
determine a second uplink corrected POA corresponding to the first terminal based on the adjustment information and the first uplink corrected POA, and send the second uplink corrected POA and the uplink TOA to the LMF.

Based on the same technical idea, an LMF is further provided according to an embodiment of the present disclosure. The LMF is capable of performing any of the carrier phase positioning methods implemented in the above embodiments.

FIG. 24 illustrates a schematic diagram of the structure of the LMF provided by the embodiment of the present disclosure, i.e., it illustrates another schematic diagram of the structure of the LMF. As shown in FIG. 24, the LMF includes a processor 2401, a memory 2402, and a transceiver 2403.

The processor 2401 is responsible for managing a bus architecture and usual processing, and the memory 2402 may store data used by the processor 2401 in performing operations. The transceiver 2403 is used to receive and transmit data under control of the processor 2401.

The bus architecture may include any number of interconnected buses and bridges, which are specifically linked together by various circuits of one or more processors represented by processor 2401 and memory represented by memory 2402. The bus architecture may also link together various other circuits such as peripherals, voltage regulators, and power management circuits, all of which are well known in the art and, therefore, are not further described herein. The bus interface provides an interface. The processor 2401 is responsible for managing the bus architecture and usual processing, and the memory 2402 may store data used by the processor 2401 in performing operations.

The processes revealed by embodiments of the present disclosure may be applied in, or implemented by, the processor 2401. In implementation, steps of signal processing processes may be accomplished by integrated logic circuits in hardware in the processor 2001 or instructions in the form of software. The processor 2401 may be a general-purpose processor, a digital signal processor, a special-purpose integrated circuit, a field-programmable gate array or other programmable logic device, a discrete gate or transistor logic device, a discrete hardware component, that may implement or perform the various methods, steps, and logic block diagrams disclosed in the embodiments of the present disclosure. The general-purpose processor may be a microprocessor or any conventional processor, etc. The steps of the methods disclosed in conjunction with embodiments of the present disclosure may be embodied to be completed directly by a hardware processor, or to be performed by a combination of hardware and software modules in the processor. The software module may be located in a storage medium well known in the art, such as random memory, flash memory, read-only memory, programmable read-only memory or electrically erasable programmable memory, and register. The storage medium is located in memory 2402, and the processor 2401 reads information in memory 2402 and completes the steps of the signal processing processes in combination with the hardware of the processor 2401.

Specifically, the processor 2401 is used to read computer instructions in the memory 2402, and the processor 2401, when executing the computer instructions, performs:

controlling the transceiver 2403 to receive an uplink corrected POA sent by at least one network side device; where the uplink corrected POA is obtained by correcting an uplink POA based on adjustment information about ATA and/or AFA, and the uplink POA is obtained by measuring an uplink SRS-Pos;

determining a location of the first terminal based on the uplink corrected POA sent by the at least one network side device.

In an optional embodiment, the processor 2401 is specifically used to:

determine the location of the first terminal based on the uplink corrected POA and an uplink TOA sent by the at least one network side device and a differential correction quantity of timing deviation between every two network side devices; where the differential correction quantity of timing deviation between every two network side devices is pre-stored by the LMF or reported by the network side devices, and the uplink TOA is obtained by performing measurement on an SRS-Pos.

In an optional embodiment, the transceiver 2403 is further used to:

receive the adjustment information about ATA and/or AFA sent by the first terminal; and send the adjustment information about ATA and/or AFA to at least one network side device serving first terminal; or send the adjustment information about ATA and/or AFA to at least one network side device, a distance from which to the first terminal is less than a set distance threshold.

It should be appreciated by those skilled in the art that embodiments of the present disclosure may be provided as methods, systems, or computer program products. Accordingly, the present disclosure may be embodied into a form of fully hardware, fully software, or a combination of software and hardware aspects. Further, the present disclosure may take the form of a computer program product implemented on one or more computer-usable storage media (including, but not limited to, disk memory, CD-ROM, optical memory, and the like) that contain computer-usable program code thereon.

The present disclosure is described with reference to flowcharts and/or block diagrams of methods, devices (systems), and computer program products according to the present disclosure. It is to be understood that each of the processes and/or blocks in the flowcharts and/or block diagrams, and combinations of the processes and/or blocks in the flowcharts and/or block diagrams, may be implemented by computer program instructions. These computer program instructions may be provided to a processor of a general-purpose computer, a special-purpose computer, an embedded processor, or other programmable data-processing device to produce a machine such that the instructions executed by the processor of the computer or other programmable data-processing device produce a device for carrying out functions specified in one process or multiple processes of the flowchart and/or one block or multiple blocks of the block diagram.

These computer program instructions may also be stored in computer-readable memory capable of directing a computer or other programmable data processing device to operate in a particular manner, such that the instructions stored in that computer-readable memory produce an article of manufacture including an instruction device that implements function(s) specified in one or more of the flows of the flowchart and/or one or more of the blocks of the block diagram.

These computer program instructions may also be loaded onto a computer or other programmable data processing device such that a series of operational steps are performed on the computer or other programmable device to produce computer-implemented processing, such that the instructions executed on the computer or other programmable device provide steps for implementing function(s) specified in one or more processes of the flowchart and/or one or more blocks of the block diagram.

Obviously, those skilled in the art can make various modifications and variations to the present disclosure without departing from the spirit and scope of the present disclosure. Thus, if these modifications and variations of the present disclosure fall within the scope of claims and their technical equivalents, the present disclosure is intended to encompass these modifications and variations as well.

**Claims**

1. A carrier phase positioning method, applied to a terminal, **characterized by** comprising:

   correcting a first downlink Phase of Arrival, POA, based on adjustment information about Autonomous Time Adjustment, ATA, and/or Autonomous Frequency Adjustment, AFA, performed by the terminal to obtain a first downlink corrected POA, wherein the first downlink POA is obtained by performing measurement on a first downlink Positioning Reference Signal, PRS, sent by at least one network side device; and
   determining a location of the terminal based on the first downlink corrected POA.

2. The carrier phase positioning method according to claim 1, prior to the correcting the first downlink POA based on the adjustment information about ATA and/or AFA performed by the terminal, further comprising:

   performing ATA and/or AFA within a non-PRS duration; and
   receiving a first PRS sent by the at least one network side device and performing measurement on the received first PRS, within a PRS duration.

3. The carrier phase positioning method according to claim 2, wherein the determining the location of the terminal based on the first downlink corrected POA comprises:

   determining a second downlink corrected POA based on the adjustment information and the first downlink corrected POA; and
   determining the location of the terminal based on the second downlink corrected POA corresponding to the at least one network side device.

4. The carrier phase positioning method according to claim 1 or 3, wherein the determining the location of the terminal based on the first downlink corrected POA comprises:

   determining a Reference Signal Time Difference, RSTD, between downlink Time of Arrivals, TOAs, of every two network side devices based on the downlink TOA corresponding to the at least one network side device, and reporting the first downlink corrected POA corresponding to the at least one network side device and at least one RSTD to a Location Management Function, LMF; or
   determining, based on the first downlink corrected POA corresponding to the at least one network side device, a Phase Difference of Arrival, PDOA, between the first downlink corrected POAs of every two network side devices; determining, based on a downlink TOA corresponding to the at least one network side device, an RSTD between the downlink TOAs of every two network side devices; and reporting obtained at least one PDOA and at least one RSTD to an LMF; wherein the downlink TOA corresponding to each network side device is obtained by measuring a first PRS sent by the each network side device.

5. The carrier phase positioning method according to claim 1, wherein the network side device comprises a base station and/or a Transmission Reception Point, TRP.

6. A carrier phase positioning method, applied to a network side device, **characterized by** comprising:
transmitting, at a respective moment, a Positioning Reference Signal, PRS, on an identical downlink PRS resource to a terminal using an identical downlink transmission channel and an identical beam direction, wherein the PRS is used to provide a downlink Phase of Arrival, POA, and the downlink POA is used for determination of a location of the terminal after correction of the downlink POA based on adjustment information about Autonomous Time Adjustment, ATA, and/or Autonomous Frequency Adjustment, AFA.

7. The carrier phase positioning method according to claim 6, wherein the network side device comprises a base station and/or a Transmission Reception Point, TRP.

8. A carrier phase positioning method, applied to a terminal, **characterized by** comprising:

sending adjustment information about Autonomous Time Adjustment, ATA, and/or Autonomous Time Adjustment, ATA, performed by the terminal to at least one network side device;
transmitting a Sounding Reference Signal for positioning, SRS-Pos, on an identical SRS-Pos resource to the at least one network side device using an identical transmission channel and an identical beam direction.

9. The carrier phase positioning method according to claim 8, wherein the sending the adjustment information to the at least one network side device comprises:
sending any one or more of following information to the at least one network side device:

an adjustment amount of ATA;
an adjustment amount of AFA;
a rate of change of timing deviation of a crystal oscillator of the terminal and a rate of change of frequency deviation of the crystal oscillator of the terminal;
a timestamp at which ATA becomes effective, which refers to a moment at which the terminal performs ATA; and
a timestamp at which AFA becomes effective, which refers to a moment at which the terminal performs AFA.

10. The carrier phase positioning method according to claim 8, wherein the network side device comprises a base station and/or a Transmission Reception Point, TRP.

11. A carrier phase positioning method, applied to a network side device, **characterized by** comprising:

receiving adjustment information about Autonomous Time Adjustment, ATA, and/or Autonomous Frequency Adjustment, AFA, performed by a first terminal; and
correcting a first uplink Phase of Arrival, POA, based on the adjustment information about ATA and/or AFA to obtain a first uplink corrected POA; wherein the first uplink corrected POA is used to assist in determining a location of the first terminal, and the first uplink POA is obtained by measuring a first uplink Sounding Reference Signal for positioning, SRS-Pos, sent by the first terminal.

12. The carrier phase positioning method according to claim 11, prior to the correcting the first uplink POA based on the adjustment information about ATA and/or AFA, further comprising:
receiving a first SRS-Pos sent by the first terminal and measure the received first SRS-Pos, within an SRS-Pos duration.

13. The carrier phase positioning method according to claim 11, wherein the receiving the adjustment information about ATA and/or AFA performed by the first terminal comprises:

receiving the adjustment information about ATA and/or AFA which is sent directly from the first terminal; or
receiving the adjustment information about ATA and/or AFA which is forwarded by a Location Management Function, LMF.

14. The carrier phase positioning method according to claim 11, after obtaining the first uplink corrected POA, further comprising:
transmitting the first uplink corrected POA and an uplink Time of Arrival, TOA, to an LMF, the uplink TOA being obtained by measuring a first SRS-Pos sent by the first terminal.

15. The carrier phase positioning method according to claim 14, further comprising:

determining a second uplink corrected POA corresponding to the first terminal based on the adjustment information and the first uplink corrected POA, and
sending the second uplink corrected POA and the uplink TOA to the LMF.

16. The carrier phase positioning method according to claim 11, wherein the network side device comprises a base station and/or a Transmission Reception Point, TRP.

17. A carrier phase positioning method, applied to a Location Management Function, LMF, **characterized by** comprising:

receiving an uplink corrected Phase of Arrival, POA, sent by at least one network side device, wherein the uplink corrected POA is obtained by correcting an uplink POA based on adjustment information about Autonomous Time Adjustment, ATA, and/or Autonomous Frequency Adjustment, AFA, and the uplink POA is obtained by performing measurement on an uplink Sounding Reference Signal for positioning, SRS-Pos;
determining a location of a first terminal based on the uplink corrected POA sent by the at least one network side device.

18. The carrier phase positioning method according to claim 17, wherein the determining the location of the first terminal based on the uplink corrected POA sent by the at least one network side device comprises:
determining the location of the first terminal based on the uplink corrected POA and an uplink Time of Arrival, TOA, sent by the at least one network side device and a differential correction quantity of timing deviation between every two network side devices; wherein the differential correction quantity of timing deviation between every two network side devices is pre-stored by the LMF or reported by network side devices, and the uplink TOA is obtained by performing measurement on an SRS-Pos.

19. The carrier phase positioning method according to claim 18, further comprising:

receiving the adjustment information about ATA and/or AFA sent by the first terminal; and
sending the adjustment information about ATA and/or AFA to at least one network side device serving the first terminal; or sending the adjustment information about ATA and/or AFA to at least one network side device, a distance from which to the first terminal is less than a set distance threshold.

20. A terminal, **characterized by** comprising:

a downlink correction unit, configured to correct a first downlink Phase of Arrival, POA, based on adjustment information about Autonomous Time Adjustment, ATA, and/or Autonomous Frequency Adjustment, AFA, performed by the terminal to obtain a first downlink corrected POA, wherein the first downlink POA is obtained by performing measurement on a first downlink Positioning Reference Signal, PRS, sent by at least one network side device; and
a downlink determination unit, configured to determine a location of the terminal based on the first downlink corrected POA.

21. A network side device, **characterized by** comprising:
a downlink transmitting unit, configured to transmit, at a respective moment, a Positioning Reference Signal, PRS, on an identical downlink PRS resource to a terminal using an identical downlink transmission channel and an identical beam direction, wherein the PRS is used to provide a downlink Phase of Arrival, POA, and the downlink POA is used for determination of a location of the terminal after correction of the downlink POA based on adjustment information about Autonomous Time Adjustment, ATA, and/or Autonomous Frequency Adjustment, AFA.

22. A terminal, comprising a memory, a transceiver and a processor, **characterized in that**

the memory is configured to store computer instructions;
the transceiver is configured to receive and transmit data under control of the processor; and
the processor is configured to read a computer program in the memory and perform:

correcting a first downlink Phase of Arrival, POA, based on adjustment information about Autonomous Time Adjustment, ATA, and/or Autonomous Frequency Adjustment, AFA, performed by the terminal to obtain a first downlink corrected POA, wherein the first downlink POA is obtained by performing measurement on a first downlink Positioning Reference Signal, PRS, sent by at least one network side device; and determining a location of the terminal based on the first downlink corrected POA.

23. The terminal according to claim 22, wherein the processor is further configured to:

perform ATA and/or AFA within a non-PRS duration; and
receive a first PRS sent by the at least one network side device and perform measurement on the received first PRS, within a PRS duration.

24. The terminal according to claim 23, wherein the processor is configured to:

determine a second downlink corrected POA based on the adjustment information and the first downlink corrected POA; and
determine the location of the terminal based on the second downlink corrected POA corresponding to the at least one network side device.

25. The terminal according to claim 22 or 24, wherein the processor is configured to:

determine a Reference Signal Time Difference, RSTD, between downlink Time of Arrivals, TOAs, of every two network side devices based on the downlink TOA corresponding to the at least one network side device, and report the first downlink corrected POA corresponding to the at least one network side device and at least one RSTD to a Location Management Function, LMF; or
determine, based on the first downlink corrected POA corresponding to the at least one network side device, a Phase Difference of Arrival, PDOA, between the first downlink corrected POAs of every two network side devices; determine, based on a downlink TOA corresponding to the at least one network side device, an RSTD between the downlink TOAs of every two network side devices; and report obtained at least one PDOA and at least one RSTD to an LMF; wherein the downlink TOA corresponding to each network side device is obtained by measuring a first PRS sent by the each network side device.

26. The terminal according to claim 22, wherein the network side device comprises a base station and/or a Transmission Reception Point, TRP.

27. A network side device, comprising a memory, a transceiver and a processor, **characterized in that**

the memory is configured to store computer instructions; and
the transceiver is configured to, under control of the processor, transmit, at a respective moment, a Positioning Reference Signal, PRS, on an identical downlink PRS resource to a terminal using an identical downlink transmission channel and an identical beam direction, wherein the PRS is used to provide a downlink Phase of Arrival, POA, and the downlink POA is used for determination of a location of the terminal after correction of the downlink POA based on adjustment information about Autonomous Time Adjustment, ATA, and/or Autonomous Frequency Adjustment, AFA.

28. The network side device according to claim 27, wherein the network side device comprises a base station and/or a Transmission Reception Point, TRP.

29. A terminal, **characterized by** comprising:

an uplink adjustment unit, configured to send adjustment information about Autonomous Time Adjustment, ATA, and/or Autonomous Time Adjustment, ATA, performed by the terminal to at least one network side device; and
an uplink transmitting unit, configured to transmit a Sounding Reference Signal for positioning, SRS-Pos, on an identical SRS-Pos resource to the at least one network side device using an identical transmission channel and an identical beam direction.

30. A network side device, **characterized by** comprising:

a first uplink receiving unit, configured to receive adjustment information about Autonomous Time Adjustment, ATA, and/or Autonomous Frequency Adjustment, AFA, performed by a first terminal; and

an uplink correction unit, configured to correct a first uplink Phase of Arrival, POA, based on the adjustment information about ATA and/or AFA to obtain a first uplink corrected POA; wherein the first uplink corrected POA is used to assist in determining a location of the first terminal, and the first uplink POA is obtained by measuring a first uplink Sounding Reference Signal for positioning, SRS-Pos, sent by the first terminal.

31. A Location Management Function, LMF, **characterized by** comprising:

a second uplink receiving unit, configured to receive an uplink corrected Phase of Arrival, POA, sent by at least one network side device, wherein the uplink corrected POA is obtained by correcting an uplink POA based on adjustment information about Autonomous Time Adjustment, ATA, and/or Autonomous Frequency Adjustment, AFA, and the uplink POA is obtained by performing measurement on an uplink Sounding Reference Signal for positioning, SRS-Pos; and

an uplink determination unit, configured to determine a location of a first terminal based on the uplink corrected POA sent by the at least one network side device.

32. A terminal, comprising a memory, a transceiver and a processor, **characterized in that**

the memory is configured to store computer instructions;
the transceiver is configured, under control of the processor, to

send adjustment information about Autonomous Time Adjustment, ATA, and/or Autonomous Time Adjustment, ATA, performed by the terminal to at least one network side device;
transmit a Sounding Reference Signal for positioning, SRS-Pos, on an identical SRS-Pos resource to the at least one network side device using an identical transmission channel and an identical beam direction.

33. The terminal according to claim 32, wherein the transceiver is further configured to send any one or more of following information to the at least one network side device:

an adjustment amount of ATA;
an adjustment amount of AFA;
a rate of change of timing deviation of a crystal oscillator of the terminal and a rate of change of frequency deviation of the crystal oscillator of the terminal;
a timestamp at which ATA becomes effective, which refers to a moment at which the terminal performs ATA; and
a timestamp at which AFA becomes effective, which refers to a moment at which the terminal performs AFA.

34. A network side device, comprising a memory, a transceiver and a processor, **characterized in that**

the memory is configured to store computer instructions;
the transceiver is configured to receive and transmit data under control of the processor; and
the processor is configured to read a computer program in the memory and perform:

controlling the transceiver to receive adjustment information about Autonomous Time Adjustment, ATA, and/or Autonomous Frequency Adjustment, AFA, performed by a first terminal; and
correcting a first uplink Phase of Arrival, POA, based on the adjustment information about ATA and/or AFA to obtain a first uplink corrected POA; wherein the first uplink corrected POA is used to assist in determining a location of the first terminal, and the first uplink POA is obtained by measuring a first uplink Sounding Reference Signal for positioning, SRS-Pos, sent by the first terminal.

35. The network side device according to claim 34, wherein the processor is configured to:
control the transceiver to receive a first SRS-Pos sent by the first terminal and measure the received first SRS-Pos, within an SRS-Pos duration.

36. The network side device according to claim 34, wherein the transceiver is configured to:

receive the adjustment information about ATA and/or AFA which is sent directly from the first terminal; or
receive the adjustment information about ATA and/or AFA which is forwarded by a Location Management Function, LMF.

**37.** The network side device according to claim 34, wherein the transceiver is configured to:
transmit the first uplink corrected POA and an uplink Time of Arrival, TOA, to an LMF, the uplink TOA being obtained by measuring a first SRS-Pos sent by the first terminal.

**38.** The network side device according to claim 37, wherein the processor is further configured to:

determine a second uplink corrected POA corresponding to the first terminal based on the adjustment information and the first uplink corrected POA, and
send the second uplink corrected POA and the uplink TOA to the LMF.

**39.** A Location Management Function, LMF, comprising a memory, a transceiver and a processor, **characterized in that**

the memory is configured to store computer instructions;
the transceiver is configured to receive and transmit data under control of the processor; and
the processor is configured to read a computer program in the memory and perform:

controlling the transceiver to receive an uplink corrected Phase of Arrival, POA, sent by at least one network side device, wherein the uplink corrected POA is obtained by correcting an uplink POA based on adjustment information about Autonomous Time Adjustment, ATA, and/or Autonomous Frequency Adjustment, AFA, and the uplink POA is obtained by performing measurement on an uplink Sounding Reference Signal for positioning, SRS-Pos; and
determining a location of a first terminal based on the uplink corrected POA sent by the at least one network side device.

**40.** The LMF according to claim 39, wherein the processor is configured to:
determine the location of the first terminal based on the uplink corrected POA and an uplink Time of Arrival, TOA, sent by the at least one network side device and a differential correction quantity of timing deviation between every two network side devices; wherein the differential correction quantity of timing deviation between every two network side devices is pre-stored by the LMF or reported by network side devices, and the uplink TOA is obtained by performing measurement on an SRS-Pos.

**41.** The LMF according to claim 40, wherein the transceiver is further configured to:

receive the adjustment information about ATA and/or AFA sent by the first terminal; and
send the adjustment information about ATA and/or AFA to at least one network side device serving the first terminal; or send the adjustment information about ATA and/or AFA to at least one network side device, a distance from which to the first terminal is less than a set distance threshold.

**42.** A computer readable storage medium, which stores computer instructions thereon, **characterized in that** the computer instructions, when executed by a processor, implement the carrier phase positioning method according to any one of claims 1 to 5.

**43.** A computer readable storage medium, which stores computer instructions thereon, **characterized in that** the computer instructions, when executed by a processor, implement the carrier phase positioning method according to any one of claims 6 to 7.

**44.** A computer readable storage medium, which stores computer instructions thereon, **characterized in that** the computer instructions, when executed by a processor, implement the carrier phase positioning method according to any one of claims 8 to 10.

**45.** A computer readable storage medium, which stores computer instructions thereon, **characterized in that** the computer instructions, when executed by a processor, implement the carrier phase positioning method according to any one of claims 11 to 16.

**46.** A computer readable storage medium, which stores computer instructions thereon, **characterized in that** the computer instructions, when executed by a processor, implement the carrier phase positioning method according to any one of claims 17 to 19.

102

network side
device

| base station | TRP |

101

**FIG. 1**

terminal a

network side
device i

S201

performs ATA and/or AFA and records adjustment information about ATA and/or AFA

S202 transmits a first PRS, on an identical PRS resource, using an identical downlink transmission channel and an identical beam direction

S203

measures the first PRS sent by network side device $i$ and obtains a first downlink POA and a downlink TOA corresponding to network side device $i$

S204

corrects the first downlink POA corresponding to network side device $i$ according to the adjustment information about ATA and/or AFA and obtains a first downlink corrected POA corresponding to network side device $i$

**FIG. 2**

**FIG. 3**

**FIG. 4**

**FIG. 5**

**FIG. 6**

terminal *a*

network side device *i*

LMF

S701 sends adjustment information about
ATA and/or AFA to network side device *i*

S702

receives the adjustment
information about ATA and/or
AFA sent by terminal *a*

S703 separately sends a first SRS-Pos, on an
identical SRS-Pos resource, to network side
device *i* using an identical transmission
channel and an identical beam direction

S704

measures the first SRS-Pos sent by
terminal *a* and obtains a first uplink
POA and an uplink TOA

S705

corrects the first uplink POA according
to the adjustment information about
ATA and/or AFA and obtains a first
uplink corrected POA

S706 sends the uplink corrected POA and the uplink TOA

S707

determines a location of terminal *a*
based on the uplink corrected POA and
the uplink TOA sent by network side
device

**FIG. 7**

Phase

S6

S5

S4

H3

t₄    t₅    tₙ    t₆    t₇    Time

**FIG. 8**

**FIG. 9**

**FIG. 10**

S1101

a first downlink POA is corrected based on adjustment information about ATA and/or AFA performed by the terminal to obtain a first downlink corrected POA

S1102

a location of the terminal is determined based on the first downlink corrected POA

**FIG. 11**

S1201

adjustment information about ATA and/or AFA performed by the terminal is sent to at least one network side device

S1202

an SRS-Pos on an identical SRS-Pos resource is transmitted to the at least one network side device using an identical transmission channel and an identical beam direction

**FIG. 12**

S1301

adjustment information about ATA and/or AFA
performed by a first terminal is received

S1302

a first uplink POA is corrected based on the
adjustment information about ATA and/or AFA to
obtain a first uplink corrected POA

**FIG. 13**

S1401

an uplink corrected POA sent by at least one
network side device is received

S1402

a location of a first terminal is determined based on
the uplink corrected POA sent by the at least one
network side device

**FIG. 14**

1501

downlink correction unit

1502

downlink determination
unit

**FIG. 15**

1601

uplink adjustment unit

1602

uplink transmitting unit

**FIG. 16**

1701

first uplink receiving
unit

1702

uplink correction unit

**FIG. 17**

1701

first uplink receiving
unit

1702

uplink correction unit

1801

second uplink
transmitting unit

**FIG. 18**

1901

second uplink receiving
unit

1902

first uplink determining
unit

**FIG. 19**

2001

processor

2002

memory

2003

bus interface

transceiver

**FIG. 20**

2101

processor

2102

memory

2103

bus interface

transceiver

**FIG. 21**

2201

2202

processor

memory

2203

bus interface

transceiver

**FIG. 22**

2301

2302

processor

memory

2303

bus interface

transceiver

**FIG. 23**

2401

2402

processor

memory

2403

bus interface

transceiver

**FIG. 24**

<div align="center">**INTERNATIONAL SEARCH REPORT**</div>

| | International application No. |
|---|---|
| | **PCT/CN2023/089169** |

| A. | CLASSIFICATION OF SUBJECT MATTER |
|---|---|

G01S19/39(2010.01)i

According to International Patent Classification (IPC) or to both national classification and IPC

| B. | FIELDS SEARCHED |
|---|---|

Minimum documentation searched (classification system followed by classification symbols)

IPC:G01S; H04W; H04Q

Documentation searched other than minimum documentation to the extent that such documents are included in the fields searched

Electronic data base consulted during the international search (name of data base and, where practicable, search terms used)

CNTXT; WPABS; WPABSC; ENTXT; ENTXTC; 3GPP; CJFD; IEEE; CNKI; WOTXT: 定位, 自动定时偏差控制, ATA, 自动频率偏差控制, AFA, 载波相位测量, POA, 校正, 下行定位参考信号, PRS, 上行定位探测参考信号, SRS-Pos, positioning, autonomous time adjustment, autonomous frequency adjustment, phase of arrival, POA, correction, downlink positioning reference signals, PRS, uplink positioning sounding reference signals, SRS-Pos

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021373180 A1 (THE UNIVERSITY OF CALIFORNIA) 02 December 2021 (2021-12-02)<br>see description, paragraphs [0007] to [0068] | 1-46 |
| X | US 2013271318 A1 (TRIMBLE NAVIGATION LTD.) 17 October 2013 (2013-10-17)<br>see description, paragraphs [0006] to [0038] | 1-46 |
| A | US 2011210889 A1 (DAI LIWEN et al.) 01 September 2011 (2011-09-01)<br>entire document | 1-46 |
| A | US 2013234885 A1 (GEIER GEORGE JEFFERY et al.) 12 September 2013 (2013-09-12)<br>entire document | 1-46 |
| A | CN 102565821 A (ZHEJIANG UNIVERSITY) 11 July 2012 (2012-07-11)<br>entire document | 1-46 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 July 2023** | **07 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/089169**

| Patent document cited in search report | | | Publication date (day/month/year) | Patent family member(s) | | | Publication date (day/month/year) |
|---|---|---|---|---|---|---|---|
| US | 2021373180 | A1 | 02 December 2021 | None | | | |
| US | 2013271318 | A1 | 17 October 2013 | US | 9405012 | B2 | 02 August 2016 |
| | | | | DE | 102013206544 | A1 | 17 October 2013 |
| US | 2011210889 | A1 | 01 September 2011 | EP | 3373043 | A1 | 12 September 2018 |
| | | | | EP | 3373043 | B1 | 21 April 2021 |
| | | | | BR | 112012016122 | A2 | 28 July 2020 |
| | | | | BR | 112012016122 | A8 | 12 July 2022 |
| | | | | AU | 2016238950 | A1 | 27 October 2016 |
| | | | | AU | 2016238950 | B2 | 28 June 2018 |
| | | | | AU | 2016238950 | C1 | 27 September 2018 |
| | | | | US | 2013120187 | A1 | 16 May 2013 |
| | | | | US | 9599721 | B2 | 21 March 2017 |
| | | | | US | 8803736 | B2 | 12 August 2014 |
| | | | | EP | 2539739 | A2 | 02 January 2013 |
| | | | | WO | 2011106278 | A2 | 01 September 2011 |
| | | | | WO | 2011106278 | A3 | 24 November 2011 |
| | | | | RU | 2012139077 | A | 10 April 2014 |
| | | | | RU | 2567501 | C2 | 10 November 2015 |
| | | | | AU | 2011221207 | A1 | 14 June 2012 |
| | | | | CA | 2789713 | A1 | 01 September 2011 |
| | | | | CA | 2789713 | C | 17 October 2017 |
| US | 2013234885 | A1 | 12 September 2013 | US | 9182497 | B2 | 10 November 2015 |
| CN | 102565821 | A | 11 July 2012 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210457883